(19) Europäisches Patentamt
European Patent Office
Office européen des brevets

(11) **EP 4 708 485 A1**

(12) **EUROPEAN PATENT APPLICATION**
published in accordance with Art. 153(4) EPC

(43) Date of publication:
**11.03.2026 Bulletin 2026/11**

(21) Application number: **24797226.8**

(22) Date of filing: **26.04.2024**

(51) International Patent Classification (IPC):
*H01M 50/16* (2021.01)     *H01G 2/10* (2006.01)
*H01G 9/08* (2006.01)       *H01G 11/80* (2013.01)
*H01M 50/166* (2021.01)    *H01M 50/184* (2021.01)
*H01M 50/186* (2021.01)    *H01M 50/193* (2021.01)

(52) Cooperative Patent Classification (CPC):
**H01G 2/10; H01G 9/08; H01G 11/80; H01M 50/16;
H01M 50/166; H01M 50/184; H01M 50/186;
H01M 50/193; Y02E 60/10**

(86) International application number:
**PCT/JP2024/016607**

(87) International publication number:
**WO 2024/225484 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2023 JP 2023072809**

(71) Applicant: **Dai Nippon Printing Co., Ltd.
Tokyo 162-8001 (JP)**

(72) Inventors:
• **MIYASHIRO, Kae
Tokyo 162-8001 (JP)**
• **SASAKI, Miho
Tokyo 162-8001 (JP)**
• **URIU, Toshibumi
Tokyo 162-8001 (JP)**
• **KANAZAWA, Sayako
Tokyo 162-8001 (JP)**

(74) Representative: **Müller-Boré & Partner
Patentanwälte PartG mbB
Friedenheimer Brücke 21
80639 München (DE)**

(54) **LID, POWER STORAGE DEVICE, AND PERIPHERAL MEMBER**

(57)     Provided is a lid used with a casing of a power storage device, wherein the lid includes a heat-fusible resin layer the main material of which is an olefin-based copolymer.

FIG. 4

EP 4 708 485 A1

**Description**

Technical Field

The present invention relates to a lid, an electrical storage device, and a peripheral member.

Background Art

PTL 1 discloses an example of an electrical storage device. The electrical storage device includes an electrode assembly and an outer packaging sealing the electrode assembly. The outer packaging includes an outer package film wrapping the electrode assembly and a lid joined to the outer package film.

Citation List

Patent Literature

PTL 1: Japanese Patent Laid-open Publication No. 2022-123686

Summary of Invention

Technical Problem

In the electrical storage device, in a case where the outer package film and the lid are not sufficiently joined, a gap may be formed between the outer layer film and the lid. Therefore, improvement is needed for suitably sealing the electrode assembly with the outer packaging.

An object of the present invention is to provide an electrical storage device in which an electrode assembly can be suitably sealed with an outer packaging, a lid that is used for the electrical storage device, and a peripheral member forming the lid. Solution to Problem

A lid according to a first aspect of the present invention is a lid used for an outer packaging of an electrical storage device, the lid including a heat-sealable resin layer containing an olefin-based copolymer as a main material.

A lid according to a second aspect of the present invention is a lid used for an outer packaging of an electrical storage device, the lid including: a lid main body; and a peripheral member joined to at least a part of a peripheral part of the lid main body, wherein the peripheral member includes a heat-sealable resin layer containing an olefin-based copolymer as a main material.

A lid according to a third aspect of the present invention is the lid according to the second aspect, wherein the peripheral member is an adhesive film joined to the lid main body.

A lid according to a fourth aspect of the present invention is the lid according to the second aspect, wherein the peripheral member is a frame body joined to the lid main body.

A lid according to a fifth aspect of the present invention is the lid according to any one of the first to third aspects, wherein the olefin-based copolymer is an olefin-based random copolymer.

A lid according to a sixth aspect of the present invention is the lid according to any one of the first to fifth aspects, wherein the lid includes: a lid seal portion sealed with an outer package film forming the outer packaging; and a protrusion protruding from the lid seal portion.

A lid according to a seventh aspect of the present invention is the lid according to any one of the first to sixth aspects, wherein a fatty acid amide-based slipping agent is present in the heat-sealable resin layer.

A lid according to an eighth aspect of the present invention is the lid according to the seventh aspect, wherein a plurality of kinds of the fatty acid amide-based slipping agents are present, and at least one kind of the fatty acid amide-based slipping agents is a saturated fatty acid amide.

A lid according to a ninth aspect of the present invention is the lid according to the eighth aspect, wherein the plurality of kinds of fatty acid amide-based slipping agents further include an unsaturated fatty acid amide.

A lid according to a tenth aspect of the present invention is the lid according to the eighth or ninth aspect, wherein the number of carbon atoms of the saturated fatty acid amide is 18 or more.

A lid according to an eleventh aspect of the present invention is the lid according to any one of the eighth to tenth aspects, wherein the saturated fatty acid amide is behenic acid amide.

A lid according to a twelfth aspect of the present invention is the lid according to the ninth aspect, wherein the unsaturated fatty acid amide is erucic acid amide.

A lid according to a thirteenth aspect of the present invention is the lid according to any one of the first to fourth aspects, wherein the heat-sealable resin layer is formed of any of an acid-modified polyolefin-based resin, an unsaturated carboxylic acid-grafted polyolefin-based resin, a polypropylene-based resin, a metal ion-crosslinked polyethylene, a copolymer-based resin of ethylene and acrylic acid derivatives, and a copolymer-based resin of ethylene and methacrylic acid derivatives.

A lid according to a fourteenth aspect of the present invention is the lid according to any one of the first to fourth aspects, wherein the heat-sealable resin layer contains a propylene-based elastomer resin having a melting point higher than 150°C.

An electrical storage device according to a fifteenth aspect of the present invention includes: an electrode assembly; and an outer packaging sealing the electrode assembly, wherein the outer packaging includes an outer package film wrapping the electrode assembly and a lid joined to the outer package film, and the lid includes a heat-sealable resin layer containing an olefin-based copolymer as a main material.

An electrical storage device according to a sixteenth aspect of the present invention includes: an electrode assembly; and an outer packaging sealing the electrode assembly, wherein the outer packaging includes an outer package film wrapping the electrode assembly and a lid joined to the outer package film, the lid includes a lid main body and a peripheral member joined to at least a part of a peripheral part of the lid main body, and the peripheral member includes a heat-sealable resin layer containing an olefin-based copolymer as a main material.

A peripheral member according to a seventeenth aspect of the present invention is a peripheral member forming a lid used for an outer packaging of an electrical storage device, wherein the lid includes a lid main body and the peripheral member joined to at least a part of a peripheral part of the lid main body, and the peripheral member comprises a heat-sealable resin layer containing an olefin-based copolymer as a main material.

A peripheral member according to an eighteenth aspect of the present invention is the peripheral member according to the seventeenth aspect, which is an adhesive film joined to the lid main body.

A peripheral member according to a nineteenth aspect of the present invention is the peripheral member according to the seventeenth aspect, which is a frame body joined to the lid main body.

A lid according to a twentieth aspect of the present invention is a lid used for an outer packaging of an electrical storage device, the lid including a heat-sealable resin layer, wherein in the heat-sealable resin layer, a temperature difference T1 and a temperature difference T2 are measured by the following method, and a value obtained by dividing the temperature difference T2 by the temperature difference T1 is 0.60 or more, by differential scanning calorimetry, the temperature difference T1 between an extrapolation melting onset temperature and an extrapolation melting termination temperature of a melting peak temperature of the heat-sealable resin layer is measured, in an environment of a temperature of 85°C, the heat-sealable resin layer is left to stand for 72 hours in an electrolytic solution which is a solution in which a concentration of lithium hexafluorophosphate is 1 mol/l and a volume ratio of ethylene carbonate, diethyl carbonate and dimethyl carbonate is 1 : 1 : 1, and then dried, and the temperature difference T2 between an extrapolation melting onset temperature and an extrapolation melting termination temperature of a melting peak temperature of the heat-sealable resin layer after drying is measured by differential scanning calorimetry.

A lid according to a twenty-first aspect of the present invention is a lid used for an outer packaging of an electrical storage device, the lid including a heat-sealable resin layer, wherein the lid comprises a lid seal portion sealed with an outer package film forming the outer packaging, and a sea-island structure is observed in a sectional image acquired using a field emission scanning electron microscope with respect to a section in a thickness direction of the lid seal portion, and a ratio of an area of a portion of island of the sea-island structure in the sectional image is 0.1% or more and 50% or less.

A peripheral member according to a twenty-second aspect of the present invention is a peripheral member forming a lid used for an outer packaging of an electrical storage device, wherein the lid includes a lid main body, and the peripheral member joined to at least a part of a peripheral part of the lid main body, and the peripheral member includes a heat-sealable resin layer. In the heat-sealable resin layer, a temperature difference T1 and a temperature difference T2 are measured by the following method, and a value obtained by dividing the temperature difference T2 by the temperature difference T1 is 0.60 or more, by differential scanning calorimetry, the temperature difference T1 between an extrapolation melting onset temperature and an extrapolation melting termination temperature of a melting peak temperature of the heat-sealable resin layer is measured, in an environment of a temperature of 85°C, the heat-sealable resin layer is left to stand for 72 hours in an electrolytic solution which is a solution in which a concentration of lithium hexafluorophosphate is 1 mol/l and a volume ratio of ethylene carbonate, diethyl carbonate and dimethyl carbonate is 1 : 1 : 1, and then dried, and the temperature difference T2 between an extrapolation melting onset temperature and an extrapolation melting termination temperature of a melting peak temperature of the heat-sealable resin layer after drying is measured by differential scanning calorimetry.

A peripheral member according to a twenty-third aspect of the present invention is a peripheral member forming a lid used for an outer packaging of an electrical storage device, wherein the lid includes a lid main body, and the peripheral member joined to at least a part of a peripheral part of the lid main body, the peripheral member includes a peripheral member seal portion sealed with an outer package film forming the outer packaging, and a sea-island structure is observed in a sectional image acquired using a field emission scanning electron microscope with respect to a section in a thickness direction of the peripheral member seal portion, and a ratio of an area of a portion of island of the sea-island structure in the sectional image is 0.1% or more and 50% or less.

Advantageous Effects of Invention

According to the electrical storage device, the lid, and the peripheral member according to the present invention, it is possible to contribute to the fact that an electrode assembly can be suitably sealed with an outer packaging.

Brief Description of Drawings

[Fig. 1A] Fig. 1A is a perspective view of an electrical storage device according to an embodiment.
[Fig. 1B] Fig. 1B is a view relating to a method for measuring a sealing strength of a second seal portion of the electrical storage device of Fig. 1A.
[Fig. 2] Fig. 2 is a sectional view showing a layer configuration of an outer package film included in the electrical storage device in Fig. 1A.
[Fig. 3] Fig. 3 is a view in which the outer package film included in the electrical storage device of Fig. 1A is unfolded.
[Fig. 4] Fig. 4 is a sectional view taken along line D4-D4 in Fig. 1A.
[Fig. 5] Fig. 5 is a side view of a lid of Fig. 4 where the outer package film is omitted.
[Fig. 6] Fig. 6 is a plan view of the lid of Fig. 4 where the outer package film is omitted.
[Fig. 7] Fig. 7 is a flowchart showing an example of a manufacturing process of the electrical storage device in Fig. 1A.
[Fig. 8] Fig. 8 is a sectional view of a lid included in an electrical storage device of a second modification.
[Fig. 9] Fig. 9 is a sectional view of a lid included in an electrical storage device of a third modification.
[Fig. 10] Fig. 10 is a sectional view of a lid included in an electrical storage device of a fourth modification.
[Fig. 11] Fig. 11 is a sectional view showing an example of a layer configuration of a peripheral member of Fig. 10.
[Fig. 12] Fig. 12 is a sectional view of a lid included in an electrical storage device of a tenth modification.
[Fig. 13] Fig. 13 is a sectional view of a lid included in another electrical storage device of the tenth modification.
[Fig. 14] Fig. 14 is a sectional view showing an example of a layer configuration of a peripheral member included in still another electrical storage device of the tenth modification.
[Fig. 15] Fig. 15 is a sectional view showing an example of a layer configuration of a peripheral member included in an electrical storage device of an eleventh modification.
[Fig. 16] Fig. 16 is a sectional view of a lid included in an electrical storage device of a twelfth modification.
[Fig. 17] Fig. 17 is a sectional view of an electrical storage device 10 of a fourteenth modification.
[Fig. 18] Fig. 18 is a sectional view of a lid of Fig. 17 and its periphery.
[Fig. 19] Fig. 19 is a sectional view showing an example of a layer configuration of a barrier film of Fig. 17.
[Fig. 20] Fig. 20 is a sectional view showing another example of the layer configuration of the barrier film of Fig. 17.

Description of Embodiments

Hereinafter, an electrical storage device according to an embodiment of the present invention will be described with reference to the drawings. Note that, in this specification, a numerical range indicated by the term "A to B" means "A or more" and "B or less". For example, the notation 2 to 15 mm means 2 mm or more and 15 mm or less.

[Embodiments]

<1-1. Configuration of electrical storage device>

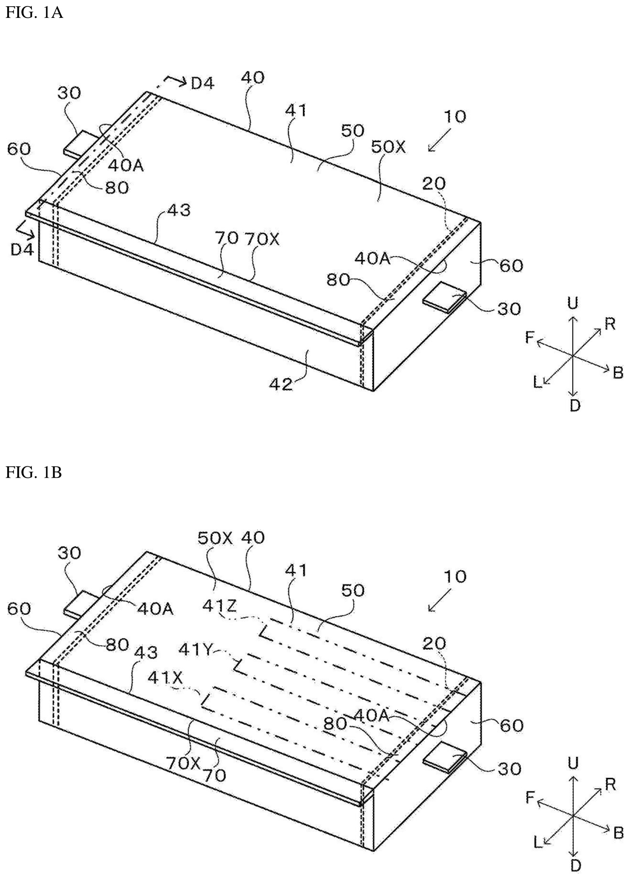

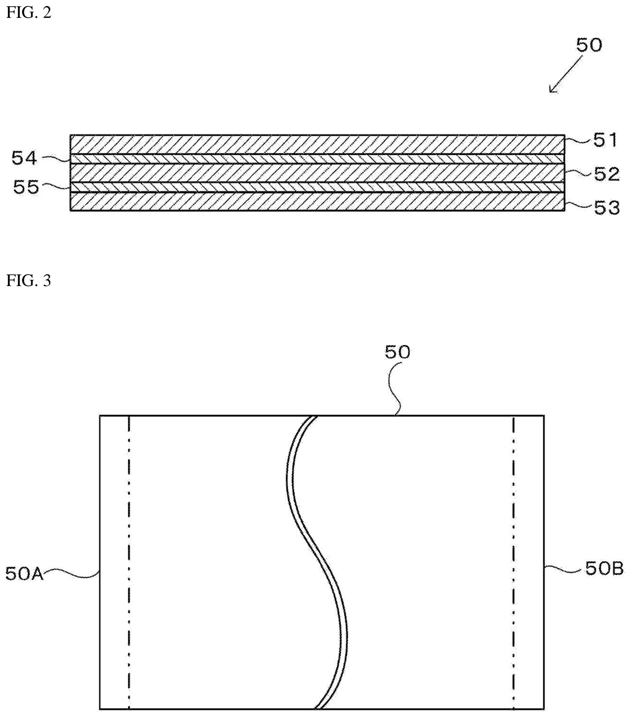

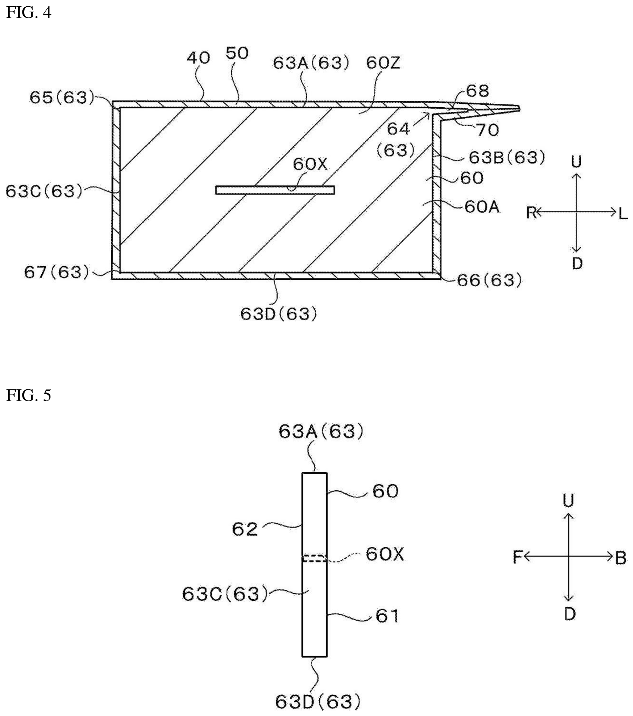

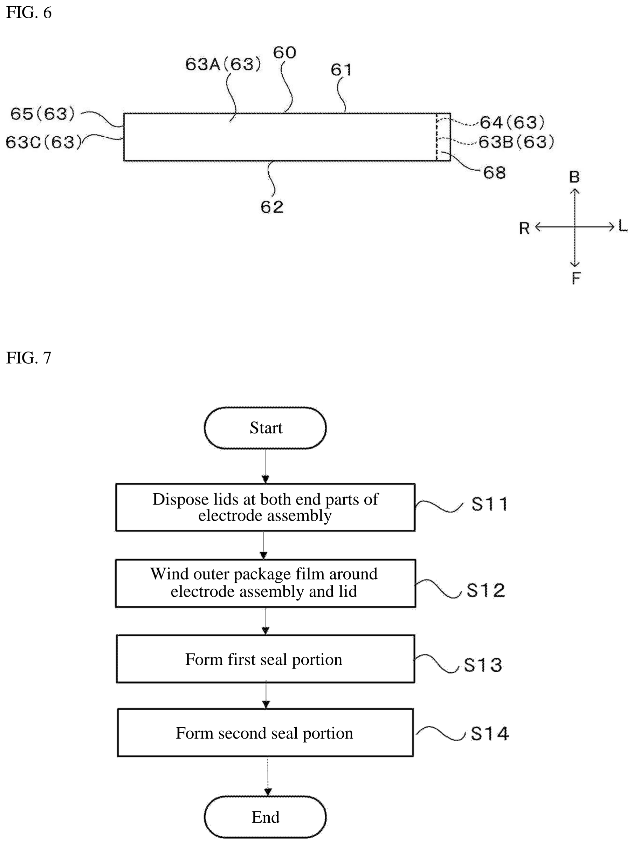

Fig. 1A is a plan view schematically showing an electrical storage device 10 of a first embodiment. Fig. 1B is a view relating to a method for measuring a sealing strength of a second seal portion 80 of the electrical storage device 10 in Fig. 1A. Fig. 2 is a sectional view showing a layer configuration of an outer package film 50 included in the electrical storage device 10 in Fig. 1A. Fig. 3 is a view in which the outer package film 50 included in the electrical storage device 10 of Fig. 1A is unfolded. Fig. 4 is a sectional view taken along line D4-D4 in Fig. 1A. Fig. 5 is a side view of a lid 60 included in the electrical storage device 10 of Fig. 1A. Fig. 6 is a plan view of the lid 60 of Fig. 5. Note that, in Figs. 1A, 4 to 6, 8 and 9, the direction along arrow UD indicates a thickness direction of the electrical storage device 10, the direction along arrow LR indicates a width direction of the electrical storage device 10, and the direction along arrow FB indicates a depth direction of the electrical storage device 10. The direction indicated by each of arrows UD, LR, and FB is also shared across the subsequent drawings.

The electrical storage device 10 includes an electrode assembly 20, electrode terminals 30, and an outer packaging 40. The electrode assembly 20 includes, for example, electrodes (positive electrode and negative electrode) forming an electrical storage member, such as a lithium ion battery, a capacitor, an all-solid-state battery, a semi-solid-state battery, a pseudo-solid-state battery, a polymer battery, an all-polymer battery, a lead storage battery, a nickel-metal hydride storage battery, a nickel-cadmium storage battery, a nickel-iron storage battery, a nickel-zinc storage battery, a silver oxide-zinc storage battery, a metal-air battery, a polyvalent cation battery, or a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal column.

In the present embodiment, the electrical storage device 10 includes two electrode terminals 30. The electrode terminals 30 are metal terminals for use in input and output of electrical power in the electrode assembly 20. One end part of each electrode terminal 30 is electrically connected to an electrode (a positive electrode or a negative electrode) included in the electrode assembly 20. The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where the lid 60 described later is made from, for example, metal, the lid 60 may also function as the electrode terminal 30, and in this case, the lid 60 having a function as an electrode terminal may, or is not required to, protrude from the outer packaging 40.

The metal material for forming the electrode terminal 30 is, for example, aluminum, nickel, copper, or the like. For example, in a case where the electrode assembly 20 is a lithium ion battery, the electrode terminal 30 connected to the positive electrode is typically made from aluminum or the like, and the electrode terminal 30 connected to the negative electrode is typically made from copper, nickel, or the like. Note that the outermost layer of the electrode assembly 20 is not necessarily an electrode, and may be, for example, a protective tape or a separator.

The outer packaging 40 seals the electrode assembly 20. The outer packaging 40 includes an outer package film 50 and the lid 60. The outer package film 50 wraps the electrode assembly 20 so as to have an opening part 40A. In the present embodiment, the outer package film 50 is wound around the electrode assembly 20 so as to have the opening part 40A. The lid 60 is disposed on a side of the electrode assembly 20 so as to close the opening part 40A. Note that the electrode assembly 20 may be housed inside the outer package film 50 configured into a tubular shape such that the opening part 40A is formed, and the opening part 40A may be closed by the lid 60.

For example, there is a method in which a housing portion (recess) for housing the electrode assembly 20 is formed in the outer package film 50 through cold molding. However, it is not always easy to form a deep housing portion by such a method. When an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. Note that, for reducing a dead space between the electrode assembly 20 and the outer package film 50 in order to improve the volume energy density of the electrical storage device 10, it is preferable that the outer package film 50 is wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As shown in Fig. 2, the outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be made from a material that is flexible and easy to bend, and the outer package film 50 may be made from, for example, a resin film. Note that the outer package film 50 is preferably heat-sealable. In the outer package film 50, the innermost layer and the outermost layer may be the heat-sealable resin layers 53. In this case, the outer package film 50 may wrap the electrode assembly 20 and the lid 60 by joining the outermost layer and the innermost layer.

The base material layer 51 included in the outer package film 50 is a layer for imparting heat resistance to the outer package film 50 to suppress generation of pinholes which may occur during processing or distribution. The base material layer 51 includes, for example, at least one layer of a stretched polyester resin layer and a stretched polyamide resin layer. For example, by the base material layer 51 including at least one layer of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 to 300 μm, more preferably 5 to 150 μm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films, and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 includes a layer formed of a metal material. Specific examples of the metal material forming the barrier layer 52 include aluminum alloys, stainless steel, titanium steel and steel sheets. In a case where the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, and a steel plate. These recycled materials can be each obtained by a known method. The recycled material of the aluminum alloy can be obtained by, for example, a manufacturing method described in International Publication No. WO 2022/092231. The barrier layer 52 may be formed only of a recycled material, or may be formed of a mixed material of a recycled material and a virgin material. Note that the metal recycled material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 to 9.0 mass%, more preferably 0.5 to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil made of, for example, a work-hardened aluminum alloy.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing the outer package film 50 having further excellent moldability, it is preferable that the stainless steel foil is formed of austenite-based stainless steel foil.

Specific examples of the austenite-based stainless steel foil include SUS 304 stainless steel, SUS 301 stainless steel and SUS 316L stainless steel, and of these, SUS 304 stainless steel is especially preferable.

In a case where the barrier layer 52 is a metal foil, the barrier layer 52 may perform a function as a barrier layer suppressing at least ingress of moisture, and has a thickness of, for example, about 5 to 200 μm. The thickness of the barrier layer 52 is preferably about 85 μm or less, more preferably about 50 μm or less, still more preferably about 40 μm or less, particularly preferably about 35 μm or less. Also, the thickness of the barrier layer 52 is preferably about 9.0 μm or more, more preferably about 20 μm or more, still more preferably about 25 μm or more. The thickness of the barrier layer 52 is preferably in the range of about 9.0 to 85 μm, about 9.0 to 50 μm, about 9.0 to 40 μm, about 9.0 to 35 μm, about 20 to 85 μm, about 20 to 50 μm, about 20 to 40 μm, about 20 to 35 μm, about 25 to 85 μm, about 25 to 50 μm, about 25 to 40 μm, or about 25 to 35 μm. In a case where the barrier layer 52 is formed of an aluminum alloy foil, the thickness thereof is especially preferably in above-described range. From the viewpoint of imparting high moldability and high rigidity to the outer package film 50, the thickness of the barrier layer 52 is preferably about 35 μm or more, more preferably about 45 μm or more, still more preferably about 50 μm or more, still more preferably about 55 μm or more, and preferably about 200 μm or less, more preferably about 85 μm or less, still more preferably about 75 μm or less, still more preferably about 70 μm or less, and is preferably in the range of about 35 to 200 μm, about 35 to 85 μm, about 35 to 75 μm, about 35 to 70 μm, about 45 to 200 μm, about 45 to 85 μm, about 45 to 75 μm, about 45 to 70 μm, about 50 to 200 μm, about 50 to 85 μm, about 50 to 75 μm, about 50 to 70 μm, about 55 to 200 μm, about 55 to 85 μm, about 55 to 75 μm, or about 55 to 70 μm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, when the barrier layer 52 includes a stainless steel foil, the thickness of the stainless steel foil is preferably about 60 $\mu$m or less, more preferably about 50 $\mu$m or less, still more preferably about 40 $\mu$m or less, still more preferably about 30 $\mu$m or less, particularly preferably about 25 $\mu$m or less. The thickness of the stainless steel foil is preferably about 10 $\mu$m or more, more preferably about 15 $\mu$m or more. The thickness of the stainless steel foil is preferably in the range of about 10 to 60 $\mu$m, about 10 to 50 $\mu$m, about 10 to 40 $\mu$m, about 10 to 30 $\mu$m, about 10 to 25 $\mu$m, about 15 to 60 $\mu$m, about 15 to 50 $\mu$m, about 15 to 40 $\mu$m, about 15 to 30 $\mu$m, or about 15 to 25 $\mu$m.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more kinds thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 $\mu$m, more preferably 40 to 150 $\mu$m.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material for forming a nonwoven fabric is preferably a material having excellent heat resistance. In a case where the buffer layer is made from a nonwoven fabric, the lower limit of the thickness of the buffer layer is preferably 100 $\mu$m, still more preferably 200 $\mu$m, still more preferably 1000 $\mu$m. In a case where the buffer layer is made from a nonwoven fabric, the upper limit of the thickness of the buffer layer is preferably 5000 $\mu$m, still more preferably 3000 $\mu$m. The thickness of the buffer layer is preferably in the range of 100 $\mu$m to 5000 $\mu$m, 100 $\mu$m to 3000 $\mu$m, 200 $\mu$m to 5000 $\mu$m, 200 $\mu$m to 3000 $\mu$m, 1000 $\mu$m to 5000 $\mu$m, or 1000 $\mu$m to 3000 $\mu$m. The thickness of the buffer layer is most preferably in the range of 1000 $\mu$m to 3000 $\mu$m.

In a case where the buffer layer is made from rubber, the lower limit of the thickness of the buffer layer is preferably 0.5 mm. In a case where the buffer layer is made from rubber, the upper limit of the thickness of the buffer layer is preferably 10 mm, still more preferably 5 mm, still more preferably 2 mm. In a case where the buffer layer is made from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 has, for example, a cuboid shape, and is made from, for example, a resin material. Note that the lid 60 may be formed by, for example, cold-molding the outer package film 50, or may be a metal molded article. In a case where the lid 60 is a metal molded article, the lid 60 preferably has the corrosion-resistant film described in the barrier layer 52. The lid 60 includes a lid main body 60A. The lid main body 60A includes a first surface 61, a second surface 62, and a lid seal portion 63. The first surface 61 faces the electrode assembly 20. The second surface 62 is a surface on a side opposite to the first surface 61. The lid seal portion 63 is connected to the first surface 61 and the second surface 62, and is heat-sealed to the heat-sealable resin layer 53 of the outer package film 50. The lid seal portion 63 includes a first seal surface 63A, a second seal surface 63B, a third seal surface 63C, and a fourth seal surface 63D. The first seal surface 63A forms the upper surface of the lid 60. The first seal surface 63A extends in a first direction (LR direction in the present embodiment) in front view of the lid 60. The second seal surface 63B and the third seal surface 63C are connected to the first seal surface 63A and form lateral surfaces of the lid 60. The second seal surface 63B and the third seal surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 63D forms the lower surface of the lid 60. The fourth seal surface 63D extends in a first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on top of another. From another viewpoint, in a case where the lid 60 has a plate shape, the lid seal portion 63 of the lid 60 is preferably thick to some extent such that the lid seal portion 63 of the lid 60 and the outer package film 50 can be suitably heat-sealed when the second seal portion 80 described later is formed. The minimum value of the thickness of the lid seal portion 63 of the lid 60 is, for example, 1.0 mm, more preferably 3.0 mm, still more preferably 4.0 mm. The maximum value of the thickness of the lid seal portion 63 of the lid 60 is, for example, 20 mm, more preferably 15 mm, still more preferably 10 mm. The maximum value of the thickness of the lid seal portion 63 of the lid 60 may be 20 mm or more. The thickness of the lid seal portion 63 of the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, in a case where the lid 60 is described as having a plate shape, an aspect in which the lid 60 is made only of the film specified by Japanese Industrial Standard (JIS), [Packaging Terminology] Standard is not included. Note that the thickness of the lid seal portion 63 of the lid 60 may vary depending on a portion of the lid 60. In a case where the thickness of the lid seal portion 63 of the lid 60 varies depending on a portion, the thickness of the thickest portion is defined as the thickness of the lid seal portion 63 of the lid 60.

The lid seal portion 63 further includes boundaries 64, 65, 66 and 67. The boundary 64 is a boundary between the first seal surface 63A and the second seal surface 63B. The boundary 65 is a boundary between the first seal surface 63A and the third seal surface 63C. The boundary 66 is a boundary between the fourth seal surface 63D and the second seal surface 63B. The boundary 67 is a boundary between the fourth seal surface 63D and the third seal surface 63C. The shapes of the boundaries 64 to 67 may be angular, or may be rounded off by R processing. In the present embodiment, the boundaries 64 to 67 are angular.

From the viewpoint of suitably heat-sealing the lid 60 and the outer package film 50, the main materials of materials for forming the lid 60 and materials for forming the heat-sealable resin layer 53 of the outer package film 50 are preferably the same. In the present embodiment, polypropylene is a main material of materials for forming the lid 60 and materials for forming the heat-sealable resin layer 53. Note that the main material refers to, for example, a material that accounts for 50% or more of the materials contained in constituent elements.

In the present embodiment, the lid 60 includes a heat-sealable resin layer 60Z containing an olefin-based copolymer as a main material. In the present embodiment, the entire lid 60 is formed of the heat-sealable resin layer 60Z. In the lid 60, a portion including at least the lid seal portion 63 may be formed of the heat-sealable resin layer 60Z. The main material for forming the heat-sealable resin layer 60Z is preferably an olefin-based random copolymer.

The heat-sealable resin layer 60Z contains a polyolefin backbone such as a polyolefin or an acid-modified polyolefin. The resin forming the heat-sealable resin layer 60Z can be confirmed to contain a polyolefin backbone by an analysis method such as infrared spectroscopy or gas chromatography-mass spectrometry. It is preferable that a peak derived from maleic anhydride is detected when the resin forming the heat-sealable resin layer 60Z is analyzed by infrared spectroscopy. For example, when a maleic anhydride-modified polyolefin is measured by infrared spectroscopy, peaks derived from maleic anhydride are detected near wavenumbers of $1760 \text{ cm}^{-1}$ and $1780 \text{ cm}^{-1}$. In a case where the heat-sealable resin layer 60Z is a layer formed of a maleic anhydride-modified polyolefin, a peak derived from maleic anhydride is detected when measurement is performed by infrared spectroscopy. However, when the degree of acid modification is low, the peaks may be too small to be detected. In that case, the peaks can be analyzed by nuclear magnetic resonance spectroscopy.

The heat-sealable resin layer 60Z preferably contains a resin containing a polyolefin backbone as a main component, more preferably contains polyolefin as a main component, still more preferably contains polypropylene as a main component. Here, the main component means a resin component, the content ratio of which is, for example, 35 mass% or more, preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the heat-sealable resin layer 60Z. For example, the phrase "the heat-sealable resin layer 60Z contains polypropylene as a main component" means that the content ratio of polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the heat-sealable resin layer 60Z.

Specific examples of the polyolefin include polyethylenes such as low-density polyethylene, medium-density polyethylene, high-density polyethylene and linear low-density polyethylene; ethylene-$\alpha$-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-$\alpha$-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among them, cyclic alkenes are preferable, and norbornene is still more preferable.

The polyolefin may be an acid-modified polyolefin. The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by performing copolymerization with acid component replacing a part of monomers forming the cyclic polyolefin, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

It is preferable that a plurality of kinds of amide-based slipping agents are present in the heat-sealable resin layer 60Z. In the manufacture of the electrical storage device 10, when the lid 60 is subjected to molding, an amide-based slipping agent is present on the surface of the heat-sealable resin layer 60Z. As a result, the slippage of the surface of the heat-sealable resin layer 60Z is improved, and the moldability of the lid 60 is enhanced.

Examples of the method of allowing the amide-based slipping agent to be present in the heat-sealable resin layer 60Z include a method of coating the surface of the heat-sealable resin layer 60Z of the lid 60 with an amide-based slipping agent and a method of blending an amide-based slipping agent in a polyolefin resin of the like forming the heat-sealable resin layer 60Z. Note that, also in a case where an amide-based slipping agent is blended in a polyolefin resin or the like forming the heat-sealable resin layer 60Z, the amide-based slipping agent can be present on the surface of the heat-sealable resin layer 60Z by bleeding out the amide-based slipping agent on the surface of the heat-sealable resin layer 60Z. On the other hand, also in a case where the surface of the heat-sealable resin layer 60Z of the lid 60 is coated with the amide-based slipping agent, a part of the amide-based slipping agent transfers from the surface to the inside, so that the amide-based slipping agent can be present inside the heat-sealable resin layer 60Z. Note that, as a method of bleeding out the amide-based slipping agent to the surface of the heat-sealable resin layer 60Z, it is common to age the lid 60 at a slightly high temperature of about 30 to 50°C for about several hours to 3 days to facilitate bleeding; however, as the temperature approaches to the melting point of the amide-based slipping agent, the amount of saturated slipping agent to the heat-sealable resin layer 60Z increases, and thus attention is required for the addition amount and the aging temperature.

In the present embodiment, it is preferable that a plurality of kinds of the fatty acid amide-based slipping agents are present in the heat-sealable resin layer 60Z, and at least one kind of the fatty acid amide-based slipping agents is preferably a saturated fatty acid amide. One kind of fatty acid amide-based slipping agent may be present in the heat-sealable resin layer 60Z.

The saturated fatty acid amide may be used alone, or may be used in combination of two or more kinds thereof. The saturated fatty acid amide is not particularly limited, but from the viewpoint of further improving the moldability and the ease of continuous production of the electrical storage device 10, a saturated fatty acid amide having 18 or more carbon atoms is preferable, stearic acid amide, behenic acid amide, arachidic acid amide, and the like are more preferable, and behenic acid amide is particularly preferable.

In the present embodiment, an amide-based slipping agent other than the saturated fatty acid amide is not particularly limited, and examples thereof include a saturated fatty acid amide other than the saturated fatty acid amide exemplified above, unsaturated fatty acid amide, substituted amide, methylol amide, saturated fatty acid bisamide, and unsaturated fatty acid bisamide. Specific examples of the other saturated fatty acid amide include lauric acid amide, palmitic acid amide, stearic acid amide, and hydroxystearic acid amide. Specific examples of the unsaturated fatty acid amide include oleic acid amide and erucic acid amide. Specific examples of the substituted amide include N-oleyl palmitic acid amide, N-stearyl stearic acid amide, N-stearyl oleic acid amide, N-oleyl stearic acid amide, and N-stearyl erucic acid amide. Specific examples of the methylol amide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylene bisbehenic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearamide ethyl stearate. Specific examples of the aromatic bisamide include m-xylylenebisstearic acid amide, m-xylylenebishydroxystearic acid amide and N,N'-distearylisophthalic acid amide. One of these amide-based slipping agents may be used alone, or may be used in combination of two or more kinds thereof.

In the present embodiment, it is preferable that the plurality of kinds of amide-based slipping agents further contain an unsaturated fatty acid amide in addition to the saturated fatty acid amide. This makes it possible to further improve moldability and the ease of continuous production of the electrical storage device 10 in a case where the lid 60 is not exposed to a high temperature. The details of this mechanism are not clear, but can be considered as follows, for example. That is, the unsaturated fatty acid amide has a double bond in the molecular structure, and has a structure in which olefin chains are folded when molecules form an association. Therefore, the unsaturated fatty acid amide relatively easily moves inside the heat-sealable resin layer 60Z, easily bleeds to the surface of the heat-sealable resin layer 60Z, and easily exhibits slippage. On the other hand, the saturated fatty acid amide does not have a double bond in the molecular structure, is linear, and has a bulky structure when molecules form an association (particularly, in a case where the number of carbon atoms is 18 or more), so that it is difficult for the saturated fatty acid amide to bleed to the surface of the heat-sealable resin layer 60Z even during high-temperature storage, and slippage is hardly exhibited. One presumption is that the unsaturated fatty acid amide and the saturated fatty acid amide associate with each other to form an association having appropriate bleeding property and slippage. As a second assumption, it is considered that since the unsaturated fatty acid bleeds first to form a first layer on the surface of the heat-sealable resin layer 60Z, and then the bled saturated fatty acid is formed as a second layer between the first layer and the heat-sealable resin layer 60Z, further bleeding of the unsaturated fatty acid, which is a problem of white powder, is suppressed.

With respect to the number of carbon atoms of the saturated fatty acid amide, the superheated weight loss in a temperature region of about 230 to 280°C in which a resin (polypropylene or the like) for forming the heat-sealable resin layer 60Z is melt-extruded reaches about 50% or more when the number of carbon atoms is less than 18, and from the viewpoint of management of the content, the number of carbon atoms is desirably 18 or more. Further, since the saturated fatty acid suppresses excessive bleeding of the slipping agent (regardless of the above assumption) as described above, the number of carbon atoms is desirably about 22 as in behenic acid amide. From the viewpoint of further improving moldability and the ease of continuous production of the electrical storage device 10, the unsaturated fatty acid amide is particularly preferably erucic acid amide. The unsaturated fatty acid amide may be used alone, or may be used in combination of two or more kinds thereof.

In another example, the heat-sealable resin layer 60Z may be formed of any of an acid-modified polyolefin-based resin, an unsaturated carboxylic acid-grafted polyolefin-based resin, a polypropylene-based resin, a metal ion-crosslinked polyethylene, a copolymer-based resin of ethylene and acrylic acid derivatives, and a copolymer-based resin of ethylene and methacrylic acid derivatives.

In still another example, the heat-sealable resin layer 60Z may be formed of a polyolefin resin added with a propylene-based elastomer having a melting point higher than 150°C. As compared with a polyolefin resin not added with a propylene-based elastomer resin having a melting point higher than 150°C, the adhesive strength between the heat-sealable resin layer 60Z and the heat-sealable resin layer 53 of the outer package film 50 in an environment at around 150°C is stabilized. This is because the heat-sealable resin layer 60Z is formed in a state where the propylene-based elastomer resin having a melting point higher than 150°C is uniformly dispersed in the polyolefin resin, and the propylene-based elastomer resin having a high melting point is maintained in a state where the propylene-based elastomer resin is uniformly dispersed in the polyolefin resin even after heat sealing (for example, a sealing temperature of 190°C, a surface pressure is 1.0 MPa, and a sealing time of 3.0 seconds). This prevents melting and softening of the portion where the heat-sealable resin layer 60Z and the heat-sealable resin layer 53 are sealed, that is, the second seal portion 80 described later, even in a high-temperature environment around 150°C.

The heat-sealable resin layer 60Z includes at least one layer having an elastic modulus of 1300 MPa or more as measured with a load of indentation of 100 μN in the FB direction. Since the elastic modulus of the heat-sealable resin layer 60Z is 1300 MPa or more, high insulation quality can be exhibited even in a case where minute foreign matters are present in the heat-sealable part of the heat-sealable resin layer 60Z. Since the heat-sealable resin layer 60Z includes at least one layer having a high elastic modulus of 1300 MPa or more, it is possible to effectively prevent the heat-sealable resin layer 60Z from becoming thin even in a case where the heat-sealable resin layer is heat-sealed at a location where minute foreign matters are present.

From the viewpoint of further enhancing insulation quality, the elastic modulus is preferably 1500 MPa or more, more preferably 1800 MPa or more, still more preferably 2000 MPa or more, and preferably 3000 MPa or less, more preferably 2800 MPa or less, still more preferably 2500 MPa or less, and is preferably in the range of about 1300 to 3000 MPa, about 1300 to 2800 MPa, about 1300 to 2500 MPa, about 1500 to 3000 MPa, about 1500 to 2800 MPa, about 1500 to 2500 MPa, about 1800 to 3000 MPa, about 1800 to 2800 MPa, about 1800 to 2500 MPa, about 2000 to 3000 MPa, about 2000 to 2800 MPa, or about 2000 to 2600 MPa. More specifically, in a case where the heat-sealable resin layer 60Z is a layer having an elastic modulus of 1300 MPa or more, the above-described elastic modulus is preferable.

Measurement of the elastic modulus of the heat-sealable resin layer 60Z by an indentation method is performed as follows. The elastic modulus is measured using a nanoindenter (TriboIndenter TI 950 manufactured by HYSITRON, Inc.). In the nanoindenter, a regular triangular pyramid-shaped indenter (TI-0039 manufactured by HYSITRON, Inc.) (Berkovich type) having a diamond chip at the tip thereof is used. The section of the heat-sealable resin layer 60Z is exposed by cutting the heat-sealable resin layer 60Z at room temperature (25°C). Next, using the nanoindenter, the elastic modulus is measured at the time of perpendicularly pressing the indenter into a section of a layer to be measured in the heat-sealable resin layer 60Z. As measurement conditions, a load control method is used, and the pressing load is constant at 100 μN (the applied load is increased from 0 to 100 μN in 10 seconds, held at 100 μN for 5 seconds, and decreased from 100 to 0 μN in 10 seconds).

The logarithmic decrement ΔE of the heat-sealable resin layer 60Z at 120°C in rigid pendulum measurement is preferably 0.50 or less. The logarithmic decrement ΔE at 120°C is 0.50 or less, so that crushing in heat-sealing of the heat-sealable resin layer 60Z is effectively suppressed.

The logarithmic decrement at 120°C in the rigid pendulum measurement is an index that represents the hardness of the resin in a high-temperature environment at 120°C, and means that as the logarithmic decrement decreases, the hardness of the resin increases. The temperature at which the heat-sealable resin layer 60Z is heat-sealed is high, and in a heat-sealable part formed by heat-sealing the heat-sealable resin layer 60Z, the heat-sealable resin layer 60Z may protrude to a large extent to the inner side of the heat-sealable part (the side of a space in which the electrode assembly 20 is stored). When the heat-sealable resin layer 60Z protrudes to a large extent to the inner side of the heat-sealable part, cracks are generated in the heat-sealable resin layer 60Z with the protrusion (a so-called polymer sump) as an origination point, so that insulation quality is easily deteriorated. Therefore, when the heat-sealable resin layer 60Z protrudes to a large extent to the inner side of the heat-sealable part, so that a protrusion is formed, deterioration of insulation quality by cracks easily occurs. Thus, it is important to control the shape of the heat-sealable part, and for this purpose, the hardness of the heat-sealable resin layer 60Z at a high temperature is important. Thus, in the present embodiment, a logarithmic decrement at a high temperature of 120°C is adopted. In the rigid pendulum measurement, the attenuation rate of the pendulum at the time of increasing the resin temperature from a low temperature to a high temperature is measured. In the rigid pendulum measurement, generally, an edge portion is brought into contact with a surface of an object to be measured, and a pendulum motion is performed in a horizontal direction to apply vibrations to the object to be measured. In the present embodiment, since the hard heat-sealable resin layer 60Z having a logarithmic decrement of 0.50 or less in a high-temperature environment at 120°C is used as a material for forming the lid 60, crushing (thinning) of the heat-sealable resin layer 60Z at the time of heat-sealing the lid 60 is suppressed. Suppression of crushing of the heat-sealable resin layer 60Z inhibits the heat-sealable resin layer 60Z from protruding to a large extent to the inner side of the heat-sealable part formed by heat-sealing the heat-sealable resin layer 60Z, so that deterioration of the insulation quality of the lid 60 due to heat-sealing is effectively suppressed.

The logarithmic decrement ΔE is calculated in accordance with the following expression.

$$\Delta E = [\ln(A1/A2) + \ln(A2/A3) + ... \ln(An/An+1)]/n$$

A: amplitude
n: wavenumber

From the viewpoint of effectively suppressing the crushing of the heat-sealable resin layer 60Z when the heat-sealable resin layer 60Z is heat-sealed, the logarithmic decrement ΔE at 120°C is preferably about 0.10 or more, more preferably about 0.11 or more, still more preferably about 0.12 or more, and preferably about 0.50 or less, more preferably about 0.30 or less, still more preferably about 0.22 or less, still more preferably 0.16 or less. The logarithmic decrement $\Delta E$ is preferably in the range of about 0.10 to 0.50, about 0.10 to 0.30, about 0.10 to 0.22, about 0.10 to 0.16, about 0.11 to 0.50, about 0.11 to 0.30, about 0.11 to 0.22, about 0.11 to 0.16, about 0.12 to 0.50, about 0.12 to 0.30, about 0.12 to 0.22, or about 0.12 to 0.16.

The logarithmic decrement $\Delta E$ of the heat-sealable resin layer 60Z can be adjusted by, for example, the melt mass flow rate (MFR), the molecular weight, the melting point, the softening point, the molecular weight distribution, the degree of crystallinity, and the like of the resin constituting the heat-sealable resin layer 60Z.

In the measurement of the logarithmic decrement $\Delta E$, a commercially available rigid pendulum-type physical property tester is used to perform a rigid pendulum physical property test on the heat-sealable resin layer 60Z, using a cylindrical edge as the edge portion to be pressed against the heat-sealable resin layer 60Z, at an initial amplitude of 0.3 degrees and at a temperature elevation rate of 3°C/min in the range of temperatures of 30°C to 200°C.

The melt mass flow rate of the heat-sealable resin layer 60Z at 230°C is preferably in the range of 1 g/10 min to 80 g/10 min, and still more preferably in the range of 5 g/10 min to 60 g/10 min. The melt mass flow rate is measured on the basis of JIS K7210-1:2014.

From the viewpoint of effectively suppressing, for example, positional deviation of the second seal portion 80 described later, a melting point Tm1 of the heat-sealable resin layer 60Z is preferably 90°C or higher and 245°C or lower, more preferably 100°C or higher and 220°C or lower. From the same viewpoint, a softening point Ts1 of the heat-sealable resin layer 60Z is preferably 70°C or higher and 180°C or lower, more preferably 80°C or higher and 150°C or lower.

Here, the melting point Tm1 of the heat-sealable resin layer 60Z is a value obtained by measuring the melting point of a resin component forming the heat-sealable resin layer 60Z by a DSC method in accordance with JIS K6921-2 (ISO1873-2.2:95). In a case where the heat-sealable resin layer 60Z is formed of a blend resin containing a plurality of resin components, the melting point Tm1 thereof can be calculated by determining the melting points of the respective resins as described above and calculating a weighted average thereof in terms of a mass ratio.

The softening point Ts1 of the heat-sealable resin layer 60Z is a value measured by thermo-mechanical analyzer (TMA). In a case where the heat-sealable resin layer 60Z is formed of a blend resin containing a plurality of resin components, the softening point Ts1 thereof can be calculated by determining the softening points of the respective resins as described above and calculating a weighted average thereof in terms of a mass ratio.

The number average molecular weight (Mn) of the resin forming the heat-sealable resin layer 60Z is preferably 70,000 or more and 80,000 or less, the weight average molecular weight (Mw) thereof is 320,000 or more and 370,000 or less, and the dispersion degree (Mw/Mn) thereof is 4.5 or more and 5.5 or less.

When the number average molecular weight (Mn) and the weight average molecular weight (Mw) of the resin forming the heat-sealable resin layer 60Z each are within the above ranges, details of the mechanism by which the lid 60 can impart higher insulation quality and heat-sealability are not necessarily clear, but can be considered as follows, for example. That is, when the number average molecular weight (Mn) is less than 70,000, since there are many low-molecular-weight components, the amount of the components crushed by the pressure at the time of heat-sealing is increased, and the insulation quality is deteriorated. When the number average molecular weight (Mn) is more than 80,000, the amount of low-molecular-weight components is small, and there is a concern that the MFR may decrease, leading to deterioration of film formability. Further, when the weight average molecular weight (Mw) is less than 320,000, since the amount of high-molecular-weight components is small as a whole, the amount of the components crushed by the pressure at the time of heat-sealing is increased, and the insulation quality is deteriorated. When the weight average molecular weight (Mw) is more than 370,000, since there are many high-molecular-weight components as a whole, there is a concern that the MFR may decrease, leading to deterioration of film formability. Further, when the dispersion degree (Mw/Mn) of the resin forming the heat-sealable resin layer 60Z is within the above range, details of the mechanism by which the lid 60 can impart higher insulation quality and heat-sealability are not necessarily clear, but can be considered as follows, for example. That is, when the dispersion degree (Mw/Mn) is less than 4.5, the molecular weight distribution is narrow, and there is a concern that film formability is deteriorated such that neck-in occurs during extrusion. When the dispersion degree (Mw/Mn) is more than 5.5, since the molecular weight distribution is widened and the amount of low-molecular-weight components is also increased, the amount of the components crushed by the pressure at the time of heat-sealing is increased, and the insulation quality is deteriorated.

In the present embodiment, a through-hole 60X into which the electrode terminal 30 is inserted is formed in the lid 60. The through-hole 60X penetrates through the first surface 61 and the second surface 62. In a state where the electrode assembly 20 is housed, the electrode terminal 30 protrudes to the outside of the outer packaging 40 by passing through the through-hole 60X formed in the lid 60. A small gap between the through-hole 60X of the lid 60 and the electrode terminal 30 is filled with, for example, a resin. Note that in the electrical storage device 10, a position at which the electrode terminal 30 protrudes to the outside can be arbitrarily selected. For example, the electrode terminal 30 may protrude to the outside from a hole formed in any one of the six surfaces that the outer packaging 40 has. In this case, a small gap between the outer packaging 40 and the electrode terminal 30 is filled with, for example, a resin. Although the lid 60 and the electrode terminal 30 are provided separately in the electrical storage device 10, the lid 60 and the electrode terminal 30 may be integrally formed. Note that in a case where the electrode terminal 30 does not protrude from the end edge of the outer packaging 40, the through-hole 60X is not required to be formed in the lid 60.

In the present embodiment, surfaces of the outer package film 50 which face each other (heat-sealable resin layer 53) are heat-sealed in a state where the outer package film 50 is wrapped around the electrode assembly 20 to have an opening part 40A to thereby form a first seal portion 70.

The first seal portion 70 is formed by heat-sealing a portion including a first edge 50A and a portion including a second edge 50B in the outer package film 50 shown in Fig. 3. The first seal portion 70 extends in a longitudinal direction of the outer packaging 40. In the outer packaging 40, a position at which the first seal portion 70 is formed can be arbitrarily selected. In the present embodiment, a root 70X of the first seal portion 70 is preferably located on a side 43 of a boundary between a first surface 41 and a second surface 42 of the outer packaging 40. The first surface 41 has a larger area than the second surface 42. The root 70X of the first seal portion 70 may be located on an arbitrary surface of the outer packaging 40. In the present embodiment, the first seal portion 70 protrudes further outward than the electrode assembly 20 in plan view. The first seal portion 70 may be folded toward the second surface 42 of the outer packaging 40, or may be folded toward the first surface 41, for example.

In the present embodiment, a second seal portion 80 is formed by heat-sealing the heat-sealable resin layer 53 of the outer package film 50 and the lid seal portion 63 of the lid 60. Hereinafter, the sealing strength between the heat-sealable resin layer 53 of the outer package film 50 and the lid seal portion 63 of the lid 60 may be referred to as sealing strength of the second seal portion 80. The sealing strength of the second seal portion 80 is the sealing strength between the heat-sealable resin layer 53 and the lid 60 in the long-side portion of the lid seal portion 63, that is, the lid seal portion 63 extending in the LR (width) direction in Fig. 1A.

The sealing strength of the second seal portion 80 is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 80. The length of the lid 60 in the LR direction is 45 mm or more. Next, the sealing strength of each of the strip-shaped members 41X, 41Y, and 41Z is measured by pulling the end part opposite to the end parts of the strip-shaped members 41X, 41Y, and 41Z joined to the lid 60 upward in the UD direction (direction opposite to the first surface 41B). In the present embodiment, the sealing strength of the second seal portion 80 is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 80 is an average value of the sealing strengths of the three strip-shaped members converted into a width of 15 mm. Note that the sealing strength of the second seal portion 80 in a case where the lid 60 is divided into a plurality of parts including long sides and short sides is the sealing strength at the long side portion of the lid seal portion 63 of the plurality of parts.

From the viewpoint of suitably maintaining the state where the electrode assembly 20 is sealed with the outer packaging 40, the sealing strength of the second seal portion 80 is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 80 is 40 N/15 mm or more, the state where the electrode assembly 20 is sealed with the outer packaging 40 is suitably maintained even when the electrical storage device 10 is used for, for example, several years (less than 10 years). In a case where the sealing strength of the second seal portion 80 is 85 N/15 mm or more, the state where the electrode assembly 20 is sealed with the outer packaging 40 is suitably maintained even when the electrical storage device 10 is used for, for example, 10 years or more. The sealing strength of the second seal portion 80 is preferably 300 N/15 mm or less. The sealing strength of the second seal portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

In the present embodiment, the lid 60 preferably has a protrusion 68 protruding from the lid seal portion 63 so that a gap is hardly formed between the outer package film 50 and the lid 60. The protrusion 68 may be formed integrally with the lid main body 60A, or may be formed separately from the lid main body 60A and joined to the lid main body 60A. In the present embodiment, the protrusion 68 is formed integrally with the lid main body 60A. In the lid seal portion 63, a position at which the protrusion 68 is formed can be arbitrarily selected. A gap between the outer package film 50 and the lid 60 is likely to be formed, for example, between the root 70X of first seal portion 70 and the lid 60. In particular, In a case where the root 70X of the first seal portion 70 is located at boundaries 64 to 67 of the lid 60, ease of filling resin between the root 70X of the first seal portion 70 and the lid 60 is likely to be deteriorated. Therefore, it is preferable that the protrusion 68 is formed at a position at which the root 70X of the first seal portion 70 is located in the lid seal portion 63. In the present embodiment, the root 70X of the first seal portion 70 is located at the boundary 64 of the lid 60. Therefore, it is preferable that the protrusion 68 is formed at the boundary 64 in the lid seal portion 63. In the present embodiment, the first seal portion 70 is sealed with the protrusion 68 sandwiched therein. Note that the protrusion 68 may be formed on at least one of the first seal surface 63A, the second seal surface 63B, the third seal surface 63C, the fourth seal surface 63D, the boundary 65, the boundary 66, and the boundary 67.

The shape of the protrusion 68 can be arbitrarily selected. In the present embodiment, the protrusion 68 has a plate shape. The thickness of the protrusion 68 can be arbitrarily selected. In the present embodiment, the thickness of the protrusion 68 decreases with increasing distance from the boundary 64. In other words, the protrusion 68 is tapered with increasing distance from the boundary 64. The thickness of the protrusion 68 may be constant, or may increase with increasing distance from the boundary 64.

A direction in which the protrusion 68 extends can be arbitrarily selected. In the present embodiment, the protrusion 68 extends along the first direction (LR direction in the present embodiment). The protrusion 68 may extend along the second direction (UD direction in the present embodiment).

The length of the protrusion 68 can be arbitrarily selected as long as it is equal to or less than the length of the first seal portion 70. For example, the length of the protrusion 68 may be substantially equal to the length of the first seal portion 70, or may be 30% to 50% of the length of the first seal portion 70.

<1-2. Method for manufacturing electrical storage device>

Fig. 7 is a flowchart showing an example of a method for manufacturing the electrical storage device 10. The method for manufacturing the electrical storage device 10 includes, for example, a first step, a second step, a third step, and a fourth step. The first to fourth steps are carried out by, for example, a manufacturing apparatus of the electrical storage device 10.

In the first step in step S11, the manufacturing apparatus disposes the lid 60 with the electrode terminal 30 attached to both end parts of the electrode assembly 20. When the first step is completed, the electrode terminal 30 and the electrode of the electrode assembly 20 are electrically connected. In the first step, the lid 60 may be connected to the electrode terminals 30 in a state of being electrically connected to the electrode assembly 20.

The second step in step S12 is carried out after the first step. In the second step, the manufacturing apparatus winds the outer package film 50 around the electrode assembly 20 and the lid 60 with tension applied to the outer package film 50 while restricting the movement of the electrode assembly 20 and the lid 60 by a restriction means. The restriction means is, for example, a groove into which the electrode assembly 20 and the lid 60 are fitted. The restriction means may be an apparatus that applies an external force to the electrode assembly 20 and the lid 60 so that the electrode assembly 20 and the lid 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled.

The third step in step S13 is carried out after the second step. In the third step, the manufacturing apparatus forms the first seal portion 70 by heat-sealing the heat-sealable resin layer 53 in a portion including the first edge 50A of the outer package film 50 and the heat-sealable resin layer 53 in a portion including the second edge 50B such that the protrusion 68 of the lid 60 is sandwiched by the outer package film 50, where the heat-sealing is performed with tension applied to the outer package film 50 while the movement of the electrode assembly 20 and the lid 60 is restricted. The third step corresponds to a step of forming the first seal portion 70.

The fourth step in step S14 is carried out after the third step. The manufacturing apparatus forms the second seal portion 80 by heat-sealing the outer package film 50 and the lid 60.

<1-3. Action and effect of electrical storage device>

According to the electrical storage device 10, since the lid 60 is formed of the heat-sealable resin layer 60Z, the lid is heat-sealed with the heat-sealable resin layer 53 of the outer package film 50. Therefore, the electrode assembly 20 can be suitably sealed with the outer packaging 40.

[2. Modifications]

The above-described embodiment is an example of possible forms of the lid, the electrical storage device, and the peripheral member according to the present invention, and is not intended to limit the forms thereof. The lid, the electrical storage device, and the peripheral member according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

<2-1. First modification>

In the electrical storage device 10 of the above-described embodiment, the lid 60 may not have the protrusion 68. Note that the first modification can be similarly applied to the following second to fourteenth modifications.

<2-2. Second modification>

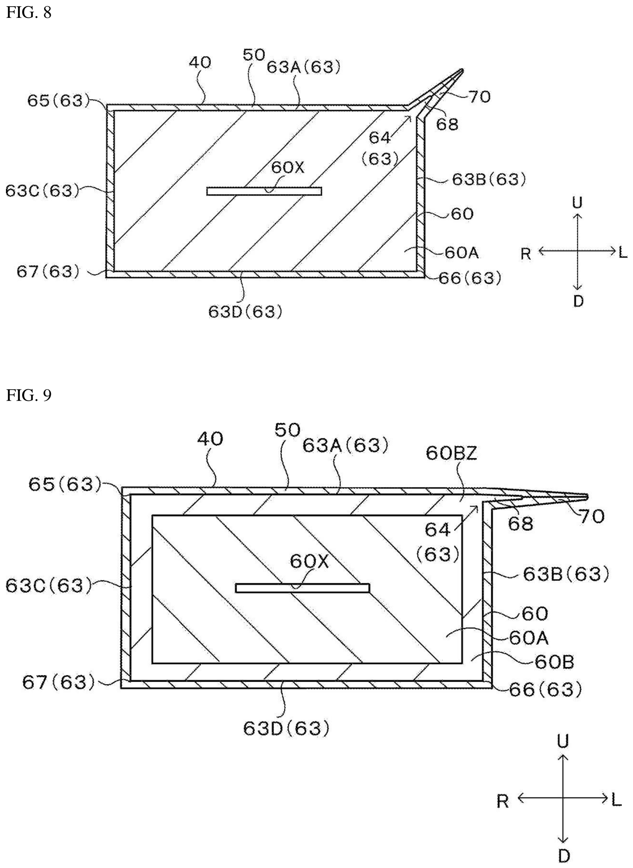

In the electrical storage device 10 of the above-described embodiment, the direction in which the protrusion 68 extends can be arbitrarily changed. For example, as shown in Fig. 8, the protrusion 68 may extend in a first direction (LR direction in the embodiment) and a third direction crossing a second direction (UD direction in the embodiment) in front view of the lid 60.

<2-3. Third modification>

In the electrical storage device 10 of the above-described embodiment, the configuration of the lid 60 can be arbitrarily changed. As shown in Fig. 9, the lid 60 may include a peripheral member 60B joined to at least a part of a peripheral part of the lid main body 60A. In the third modification, the peripheral member 60B is a frame body covering the entire peripheral part of the lid main body 60A. In this modification, for example, an arbitrary material such as metal or resin can be used as a material for forming the lid main body 60A. The material for forming the peripheral member 60B is a heat-sealable resin layer 60BZ. As specifications about the heat-sealable resin layer 60BZ, the specifications of the heat-sealable resin layer 60Z can be applied. In the third modification, the lid seal portion 63 and the protrusion 68 of the lid 60 are formed on the peripheral member 60B. In the third modification, the lid main body 60A and the peripheral member 60B may be configured separately and joined to each other. In the third modification, the lid main body 60A and the peripheral member 60B may be integrally formed by two-color molding or insert molding.

In the third modification, the electrical storage device 10 may include at least one of an adhesive film and an adhesive layer between the lid main body 60A and the peripheral member 60B for suitably bonding the lid main body and the peripheral member to each other. The adhesive film or the adhesive layer may be a single layer or a multilayer, and preferably contains a resin material having at least a polar group. The adhesive layer can be formed by dip coating, a dispenser, inkjet, spraying, screen printing, or the like. From the viewpoint of suitably bonding the lid main body 60A and the peripheral member 60B, the surface of at least the lid seal portion 63 of the lid main body 60A is preferably subjected to a roughening treatment.

In the third modification, the lid seal portion 63 of the peripheral member 60B is preferably thick to some extent to suppress deformation of the outer packaging 40 even in a case where electrical storage devices 10 are stacked on top of another. From another viewpoint, the lid seal portion 63 of the peripheral member 60B is preferably thick to some extent such that the lid seal portion 63 of the peripheral member 60B and the outer package film 50 can be suitably heat-sealed when the second seal portion 80 is formed. The minimum value of the thickness of the lid seal portion 63 of the peripheral member 60B is, for example, 1.0 mm, more preferably 3.0 mm, still more preferably 4.0 mm. The maximum value of the thickness of the lid seal portion 63 of the peripheral member 60B is, for example, 20 mm, more preferably 15 mm, still more preferably 10 mm. The maximum value of the thickness of the lid seal portion 63 of the peripheral member 60B may be 20 mm or more. The thickness of the lid seal portion 63 of the peripheral member 60B is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm.

<2-4. Fourth modification>

In the electrical storage device 10 of the above-described embodiment, the specific method for forming the protrusion 68 of the lid 60 can be arbitrarily changed. For example, the protrusion 68 may be formed by an adhesive film or the like which is joined to the lid seal portion 63 of the lid main body 60A. In this modification, for example, a plurality of adhesive films may be joined in a stacked state to the lid seal portion 63 to form the protrusion 68, or the adhesive film may be joined to the lid seal portion 63 in a flap shape to form the protrusion 68.

<2-5. Fifth modification>

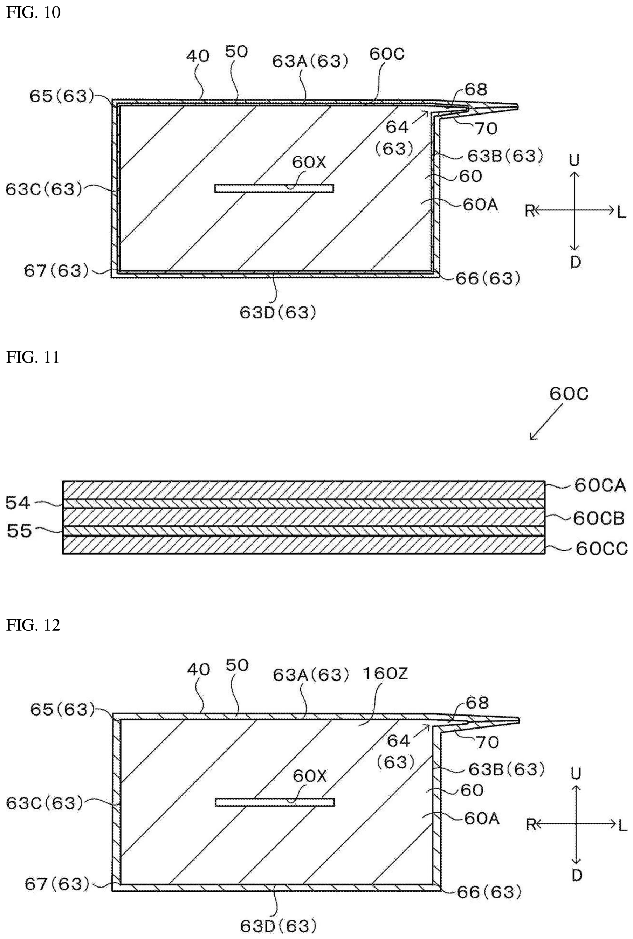

For suitably bonding the outer package film 50 and the lid 60, as shown in Fig. 10, the electrical storage device 10 of the above-described embodiment may have a peripheral member 60C disposed between the outer package film 50 and the lid main body 60A. In the fifth modification, the peripheral member 60C is an adhesive film joined to the peripheral part (lid seal portion 63) of the lid main body 60A. In the fifth modification, for example, an arbitrary material such as metal or resin can be used as a material for forming the lid main body 60A. In the fifth modification, the peripheral member 60C is bonded to substantially the entire lid seal portion 63 of the lid main body 60A. Note that the peripheral member 60C may be bonded to at least a part of the first surface 61 and at least a part of the second surface 62 of the lid 60.

In the fifth modification, for example, the second seal portion 80 is formed after the lid 60 to which the peripheral member 60C is bonded is attached to the opening part 40A at both ends of the outer packaging 40. For example, the peripheral member 60C may be wound around the lid 60 so as to cover the entire surface of the lid seal portion 63 of the lid 60. The peripheral member 60C is preferably configured to be wider than the lid seal portion 63 of the lid 60 as a whole. In this case, the peripheral member 60C can be easily adhered to the lid 60. Further, since boundaries 64 to 67 of the lid seal portion 63 are covered with the peripheral member 60C, bondability between the lid 60 and the peripheral member 60C is enhanced.

Fig. 11 is a sectional view showing an example of a layer configuration of the peripheral member 60C. The peripheral member 60C is a film capable of bonding the outer package film 50 and the lid 60. The peripheral member 60C preferably has a heat-sealable resin layer 60CA at a portion which is bonded to at least the heat-sealable resin layer 53 of the outer package film 50. In an example shown in Fig. 11, the peripheral member 60C is a laminate (laminate film) including at least a heat-sealable resin layer 60CA, a barrier layer 60CB, and a heat-sealable resin layer 60CC in the stated order. The peripheral member 60C may be a single layer configuration of the heat-sealable resin layer 60CA. As specifications about of the heat-sealable resin layers 60CA and 60CC of the peripheral member 60C, the specifications about the heat-sealable resin layer 60Z can be applied. As specifications about the barrier layer 60CB, the specifications about the barrier layer 52 of the outer package film 50 can be applied. The peripheral member 60C may have a heat-sealable resin layer instead of the heat-sealable resin layer 60CC on the side of the peripheral member 60C bonded to the lid 60. The material for forming the heat-sealable resin layer is preferably an acid-modified polyolefin-based resin obtained by graft modification with an acid such as maleic anhydride. The material for forming the heat-sealable resin layer 60CC of the peripheral member 60C can be arbitrarily selected as long as it is material that can be joined to the lid main body 60A.

The peripheral member 60C may have a heat-resistant base material layer instead of or in addition to the barrier layer 60CB. For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Note that polyethylene terephthalate is particularly preferable because it is inexpensive and has high strength.

The peripheral member 60C preferably has adhesion. In a case where the peripheral member 60C has adhesion, when the second seal portion 80 is formed in a state where the peripheral member 60C is disposed between the outer package film 50 and the lid 60, the position of the peripheral member 60C with respect to the lid 60 and the outer package film 50 is unlikely to deviate. By incorporating an adhesion-imparting resin into the heat-sealable resin layer 60CA or 60CC of the peripheral member 60C, adhesion can be imparted to the peripheral member 60C. Examples of the adhesion-imparting resin include amorphous polyolefins. Examples of the amorphous polyolefin include amorphous polypropylene, and copolymers of amorphous propylene and another $\alpha$-olefin. The content of the adhesion-imparting resin with respect to the parent material forming the heat-sealable resin is preferably 10 to 20 wt% or less.

<2-6. Sixth modification>

In the above-described embodiment, a position at which the electrode terminal 30 is disposed can be arbitrarily selected. For example, the electrode terminal 30 may protrude from the first seal portion 70.

<2-7. Seventh modification>

In the above-described embodiment, the outer package film 50 of the electrical storage device 10 may protrude outward as compared with at least one of the two lids 60 in the FB direction. The electrode assembly 20 is sealed by the part of the outer package film 50 protruding further outward than the lid 60 being closed. The parts of the outer package films 50 protruding as compared with the lids 60 may be folded like a gable top pouch or a brick-shaped pouch.

<2-8. Eighth modification>

In the above-described embodiment, the outer packaging 40 may not include one of the two lids 60. In this modification, the electrode assembly 20 is sealed by the part of the outer package film 50 protruding further outward than the electrode assembly 20 being closed at the part of the outer packaging 40 from which the lid 60 is omitted in the FB direction. In this modification, the part of the outer package film 50 protruding further outward than the electrode assembly 20 may be folded like a gable top pouch or a brick-shaped pouch.

<2-9. Ninth modification>

In the above-described embodiments, the outer contour shape of the outer packaging 40 can be arbitrarily changed. The outer contour shape of the outer packaging 40 may be a cylinder, a prism, or a cube.

<2-10. Tenth modification>

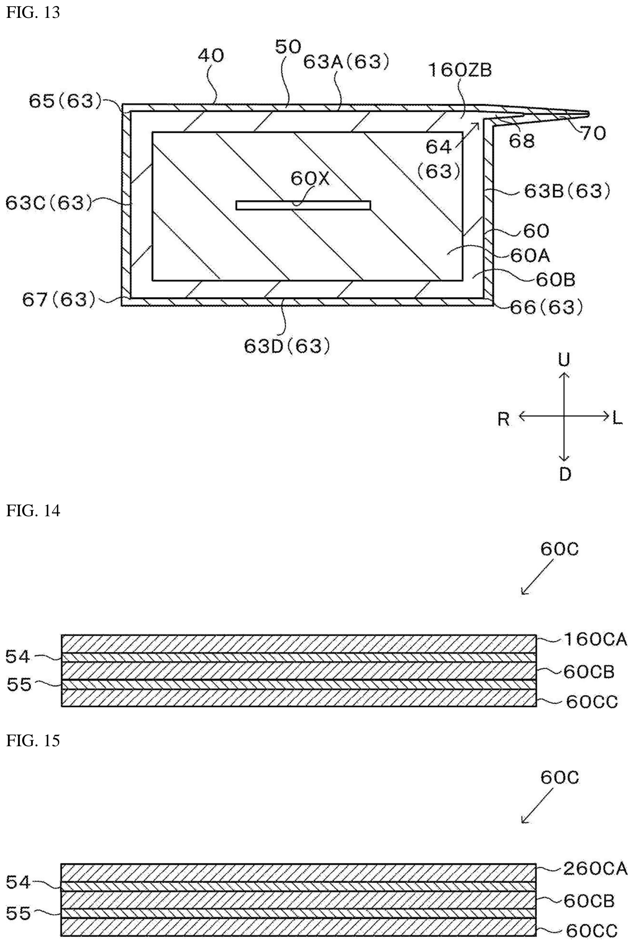

In the above-described embodiment, the lid 60 may include a heat-sealable resin layer 160Z as shown in Fig. 12 instead of the heat-sealable resin layer 60Z shown in Fig. 4. In the third modification, the peripheral member 60B may include a heat-sealable resin layer 160ZB as shown in Fig. 13 instead of the heat-sealable resin layer 60BZ shown in Fig. 9. In the fifth modification, the peripheral member 60C may include a heat-sealable resin layer 160CA as shown in Fig. 14 instead of the heat-sealable resin layer 60CA shown in Fig. 11. Hereinafter, the heat-sealable resin layer 160Z, the heat-sealable resin layer 160ZB, and the heat-sealable resin layer 160CA may be simply referred to as a heat-sealable resin layer unless otherwise distinguished.

In the tenth modification, in the heat-sealable resin layer, in the case of measuring a temperature difference T1 and a temperature difference T2 by the following method, a value (ratio T2/T1) obtained by dividing the temperature difference T2 by the temperature difference T1 is 0.60 or more.

(Measurement of temperature difference T1)

In accordance with the provision of JIS K7121: 2012, differential scanning calorimetry (DSC) is carried out to obtain a DSC curve for the heat-sealable resin layer. From the obtained DSC curve, the temperature difference T1 between the extrapolation melting onset temperature and the extrapolation melting termination temperature in the melting peak temperature of the heat-sealable resin layer is measured. Note that the measurement of the temperature difference T1 is performed for a heat-sealable resin layer that is not subjected to a treatment such as immersion in an electrolytic solution, unlike the measurement of the temperature difference T2 described below.

(Measurement of temperature difference T2)

In an environment of a temperature of 85°C, the heat-sealable resin layer is left to stand for 72 hours in an electrolytic solution which is a solution in which a concentration of lithium hexafluorophosphate is 1 mol/l and a volume ratio of ethylene carbonate, diethyl carbonate, and dimethyl carbonate is 1 : 1 : 1, and then dried. Next, in accordance with the provision of JIS K7121: 2012, differential scanning calorimetry (DSC) is carried out to obtain a DSC curve for the heat-sealable resin layer after drying. From the obtained DSC curve, the temperature difference T2 between the extrapolation melting onset temperature and the extrapolation melting termination temperature in the melting peak temperature of the heat-sealable resin layer is measured.

The resin component to be used in the heat-sealable resin layer is not particularly limited as long as it can be heat-welded, and examples thereof include polyolefins, cyclic polyolefins, acid-modified polyolefins and acid-modified cyclic polyolefins. That is, the heat-sealable resin layer may contain a polyolefin backbone, and preferably contains a polyolefin backbone. It can be analyzed that the heat-sealable resin layer contains a polyolefin backbone by, for example, infrared spectroscopy, gas chromatography-mass spectrometry, or the like, and the analysis method is not particularly limited. For example, when a maleic anhydride-modified polyolefin is measured by infrared spectroscopy, peaks derived from maleic anhydride are detected near wavenumbers of 1760 $cm^{-1}$ and 1780 $cm^{-1}$. However, when the degree of acid modification is low, the peaks may be too small to be detected. In that case, the peaks can be analyzed by nuclear magnetic resonance spectroscopy.

Specific examples of the polyolefin include polyethylene such as low-density polyethylene, medium-density polyethylene, high-density polyethylene and linear low-density polyethylene; polypropylene such as homopolypropylene, block copolymers of polypropylene (e.g. block copolymers of propylene and ethylene) and random copolymers of polypropylene (e.g. random copolymers of propylene and ethylene); and terpolymers of ethylene-butene-propylene. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene, and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene, and norbornadiene. Among these polyolefins, cyclic alkenes are preferable, and norbornene is still more preferable.

The acid-modified polyolefin is a polymer with the polyolefin modified by subjecting the polyolefin to block polymerization or graft polymerization with an acid component such as carboxylic acid. Examples of the acid component to be used for modification include carboxylic acids or anhydrides thereof such as maleic acid, acrylic acid, itaconic acid, crotonic acid, maleic anhydride and itaconic anhydride.

The acid-modified cyclic polyolefin is a polymer obtained by performing copolymerization with an $\alpha,\beta$-unsaturated carboxylic acid or an anhydride thereof replacing a part of monomers that form the cyclic polyolefin, or by block-polymerizing or graft-polymerizing an $\alpha,\beta$-unsaturated carboxylic acid or an anhydride thereof with the cyclic polyolefin. The cyclic polyolefin to be modified with a carboxylic acid is the same as described above. The carboxylic acid used for the modification is the same as the acid component used for the modification of the polyolefin.

Among these resin components, polyolefins such as polypropylene, carboxylic acid-modified polyolefins are preferable, and polypropylene and carboxylic acid-modified polypropylene are still more preferable.

The heat-sealable resin layer may be formed from one resin component alone, or may be formed from a blend polymer obtained by combining two or more resin components. Further, the heat-sealable resin layer may have only one layer, but may have two or more layers formed of the same resin component or different resin components.

The slipping agent may be contained in the heat-sealable resin layer. The slipping agent present on the surface of the heat-sealable resin layer may be obtained by exuding the slipping agent contained in the resin included in the heat-sealable resin layer or by applying the slipping agent to the surface of the heat-sealable resin layer.

More specifically, as understood from details of measurement of temperature differences T1 and T2 as described below, the closer the ratio T2/T1 is to the upper limit value of 1.0, the smaller the change in the width between the start point (extrapolation melting onset temperature) and the end point (extrapolation melting termination temperature) of the melting peak before and after the heat-sealable resin layer contacts the electrolytic solution is. That is, the value of the temperature difference T2 is usually equal to or less than the value of the temperature difference T1. One of the reasons why the change in the width between the extrapolation melting onset temperature and the extrapolation melting termination temperature of the melting peak increases is that the low molecular weight resin contained in the resin included in the heat-sealable resin layer is eluted into the electrolytic solution by contact with the electrolytic solution, and the width between the extrapolation melting onset temperature and the extrapolation melting termination temperature of the melting peak of the heat-sealable resin layer decreases after contact with the electrolytic solution compared with before contact with the electrolytic solution. One of the methods for reducing the change in the width between the extrapolation melting onset temperature and the extrapolation melting termination temperature of the melting peak is a method in which the rate of the low molecular weight resin contained in the resin included in the heat-sealable resin layer is adjusted.

In measurement of the extrapolation melting onset temperature and the extrapolation melting termination temperature in the melting peak temperature, a commercially available product can be used as a differential scanning calorimeter. As for the DSC curve, the test sample is held at -50°C for 10 minutes, and then heated to 200°C at a temperature elevation rate of 10°C/min (first time) and held at 200°C for 10 minutes, and then cooled to -50°C at a temperature reduction rate of -10°C/min and held at -50°C for 10 minutes, and then heated to 200°C at a temperature elevation rate of 10°C/min (second time) and held at 200°C for 10 minutes. As the DSC curve, a DSC curve obtained when the test sample is heated to 200°C for the second time is used. Moreover, for the measurement of the temperature difference T1 and the temperature difference T2, in the DSC curve for each, among melting peaks that appear in a range of 120 to 160°C, the melting peak having the maximum difference in heat energy input is analyzed. Even in a case where two or more peaks are present while overlapping one another, only the melting peak at which the difference in the heat energy input is the largest is analyzed.

The extrapolation melting onset temperature means the start point of the melting peak temperature, and is a temperature at the intersection of the straight line obtained by extending the low-temperature (65 to 75°C) side baseline to the high-temperature side and the tangent of the curve line of the melting peak with the largest difference in the heat energy input in the low-temperature side at a point where the gradient is maximum. The extrapolation melting termination temperature means the end point of the melting peak temperature, and is a temperature at the intersection of the straight line obtained by extending the high-temperature (170°C) side baseline to the low-temperature side and the tangent of the curve line of the melting peak with the largest difference in the heat energy input in the high-temperature side at a point where the gradient is maximum.

The value (ratio T2/T1) obtained by dividing the temperature difference T2 by the temperature difference T1 is preferably 0.70 or more, more preferably 0.75 or more, and is preferable in the range of about 0.70 to 1.0, about 0.75 to 1.0, from the viewpoint of exhibiting a higher sealing strength even when the heat-sealable resin layers are heat-sealed with the electrolytic solution deposited on the heat-sealable resin layer by contact of the electrolytic solution with the heat-sealable resin layer in a high-temperature environment. The upper limit is, for example, 1.0. For setting such a ratio T2/T1, for example, the type, composition, molecular weight and the like of the resin forming the heat-sealable resin layer are adjusted.

<2-11. Eleventh modification>

In the fifth modification, the peripheral member 60C may include a heat-sealable resin layer 260CA as shown in Fig. 15 instead of the heat-sealable resin layer 60CA shown in Fig. 11. That is, in the eleventh modification, the peripheral member 60C is formed of a laminate including at least the barrier layer 60CB and the heat-sealable resin layer 260CA in the stated order from the inner side (lid 60 side) toward the outer side (outer package film 50 side). Note that the peripheral member 60C may include at least the heat-sealable resin layer 260CA. The peripheral member 60C includes a peripheral member seal portion sealed with the outer package film 50 forming the outer packaging 40. In the eleventh modification, with respect to a section in a thickness direction of the peripheral member seal portion, a sea-island structure is observed in a sectional image acquired using a field emission scanning electron microscope, and in the sectional image, a ratio of an area of a portion of island of the sea-island structure is 0.1% or more and 50% or less. Note that the heat-sealable resin layer 260CA corresponds to the peripheral member seal portion. In the sectional image, a ratio RA of the area of a portion of island of the sea-island structure is preferably 5% or more and 50% or less, still more preferably 10% or more and 50% or less, still more preferably 25% or more and 35% or less.

The main material for forming the heat-sealable resin layer 260CA can be arbitrarily selected as long as it is a main material having a ratio RA of 5% or more and 50% or less. The main material for forming the heat-sealable resin layer 260CA is preferably an olefin-based copolymer, more preferably an olefin-based random copolymer. Note that, in the eleventh modification, in the heat-sealable resin layer 260CA disposed on the first seal surface 63A or the fourth seal surface 63D, when a section cut along a plane orthogonal to the FB direction and a section cut along a plane orthogonal to the LR direction are observed using a scanning electron microscope, a section in which an average aspect ratio of the island shape is closer to 1 is defined as a section in the transverse direction. In the heat-sealable resin layer 260CA disposed on the second seal surface 63B or the third seal surface 63C, when a section cut along a plane orthogonal to the FB direction and a section cut along a plane orthogonal to the UD direction are observed using a scanning electron microscope, a section in which an average aspect ratio of the island shape is closer to 1 is defined as a section in the transverse direction.

The fact that the sea-island structure is observed in the sectional image means that a portion of sea (sea portion) and a portion of island (island portion) are observed in the sectional image. When a small amount of polyethylene is added to polypropylene and a heat-sealable resin layer is formed by melt extrusion molding, a sea-island structure in which an island portion of polyethylene is dispersed in a sea portion of polypropylene is formed. In order to observe the sea-island structure, as described later, a section of the heat-sealable resin layer is dyed with ruthenium tetroxide or the like, and a-sectional image is acquired and observed using a scanning electron microscope. Note that specifications about the eleventh modification can be similarly applied to the peripheral member 60B (frame body) shown in Fig. 9. A portion including the lid seal portion 63 of the peripheral member 60B corresponds to the peripheral member seal portion.

<2-12. Twelfth modification>

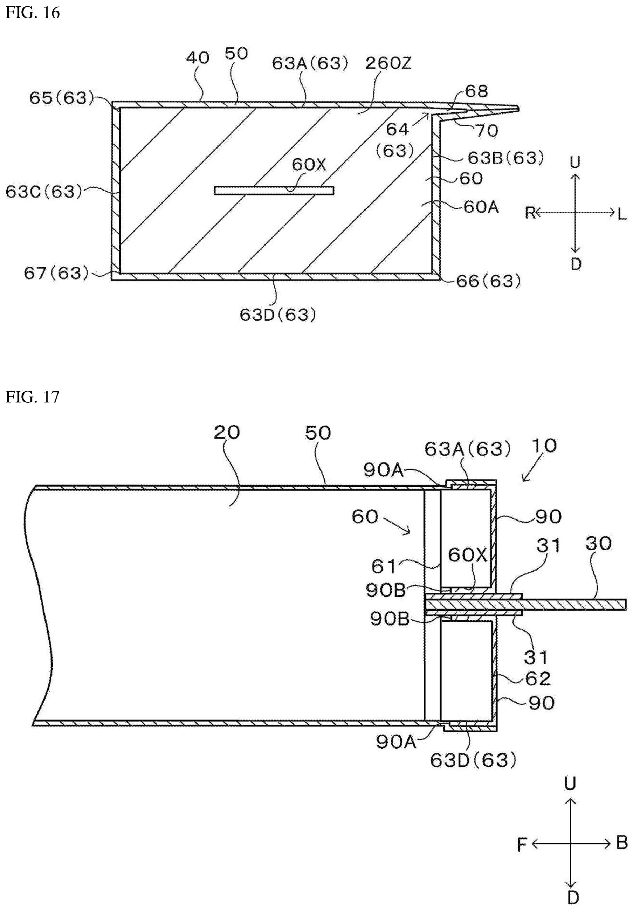

In the above-described embodiment, the lid 60 may include a heat-sealable resin layer 260Z as shown in Fig. 16 instead of the heat-sealable resin layer 60Z shown in Fig. 4. In the lid 60, with respect to a section in a thickness direction of the lid seal portion 63, a sea-island structure is observed in a sectional image acquired using a field emission scanning electron microscope, and in the sectional image, a ratio RB of an area of a portion of island of the sea-island structure is 0.1% or more and 50% or less, preferably 5% or more and 50% or less, still more preferably 10% or more and 50% or less, still more preferably 25% or more and 35% or less. In the twelfth modification, a portion including at least the lid seal portion 63 of the lid 60 may be formed of the heat-sealable resin layer 260Z. The main material for forming the heat-sealable resin layer 260Z can be arbitrarily selected as long as it is a main material having a ratio RB of 0.1% or more and 50% or less. The main material for forming the heat-sealable resin layer 260Z is preferably an olefin-based copolymer, more preferably an olefin-based random copolymer.

The fact that the sea-island structure is observed in the sectional image means that a portion of sea (sea portion) and a portion of island (island portion) are observed in the sectional image. When a small amount of polyethylene is added to polypropylene and a heat-sealable resin layer is formed by melt extrusion molding, a sea-island structure in which an island portion of polyethylene is dispersed in a sea portion of polypropylene is formed. In order to observe the sea-island structure, a section of the heat-sealable resin layer 260Z is dyed with ruthenium tetroxide or the like, and a sectional image is acquired and observed using a scanning electron microscope.

<2-13. Thirteenth modification>

In the fifth modification, the peripheral member 60C as an adhesive film may be formed of cast polypropylene having necessary physical properties such as heat resistance and moisture resistance.

<2-14. Fourteenth modification>

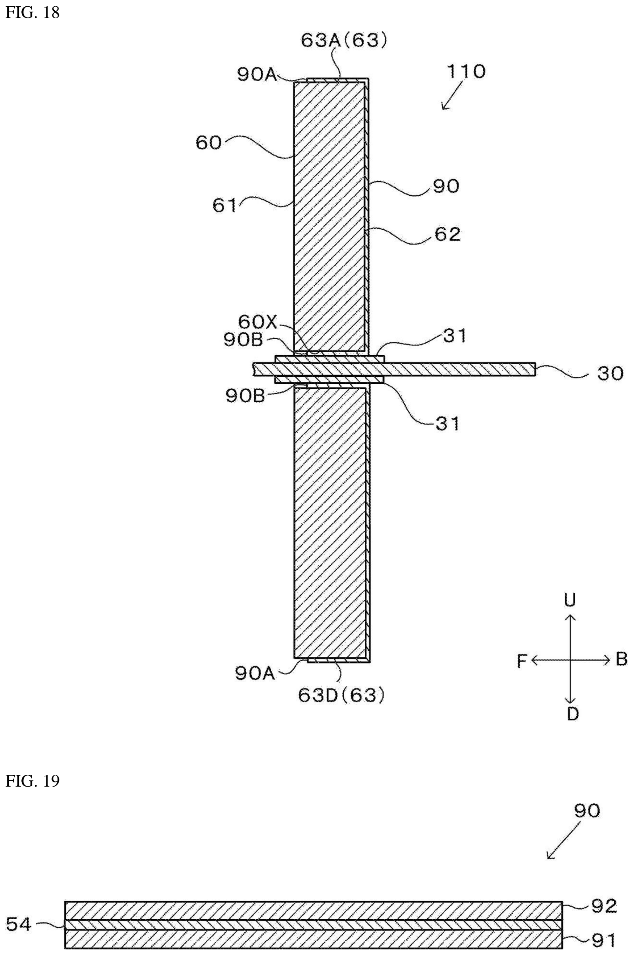

Fig. 17 is a sectional view of an electrical storage device 10 of a fourteenth modification. Fig. 18 is a sectional view of the lid 60 of Fig. 17 and its periphery.

As shown in Figs. 17 and 18, from the viewpoint of suppressing at least one of moisture and gas from entering the inside of the outer packaging 40, the barrier film 90 may be joined to the lid 60. In the present embodiment, the barrier film 90 suppresses entry of moisture and gas inside the outer packaging 40. The barrier film 90 may be joined to the lid 60 at a position at which the barrier film can be joined to the outer package film 50. In the examples shown in Figs. 17 and 18, the barrier film 90 covers the entire lid seal portion 63, the second surface 62, and the inside of the through-hole 60X of the lid 60. The barrier film 90 may cover the boundaries 64 to 67. Since the barrier film 90 covers the second surface 62 and the inside of the through-hole 60X in addition to the lid seal portion 63 and the boundaries 64 to 67, moisture is suppressed from entering the inside of the outer packaging 40 from a region between the electrode terminal 30 and the through-hole 60X. The barrier film 90 may be configured by one film, and for example, a portion covering the lid seal portion 63 and a portion covering the second surface 62 may be configured separately. In other words, the barrier film 90 may be a plurality of divided films.

The position of an end part 90A covering the lid seal portion 63 and the position of an end part 90B covering the inside of the through-hole 60X of the lid 60 in the barrier film 90 can be arbitrarily selected. In a case where the electrical storage device 10 is a battery containing an electrolytic solution such as a lithium ion battery, end parts 90A and 90B of the barrier film 90 may come into contact with a gas such as hydrogen fluoride generated from the electrolytic solution, and a barrier layer 91 included in the barrier film 90 described later may corrode.

Therefore, from the viewpoint of suppressing corrosion of the barrier layer 91, the end part 90A is preferably located at a position closer to the second surface 62 than the boundary between the lid seal portion 63 and the first surface 61. From the same viewpoint, the end part 90B is preferably located at a position closer to the opening of the through-hole 60X on the second surface 62 side than the opening thereof on the first surface 61 side. The end part 90A may be located at a boundary between the lid seal portion 63 and the first surface 61, or may extend to a position closer to the electrode assembly 20 than the lid 60. The end part 90B may be located in the vicinity of the opening of the through-hole 60X on the first surface 61 side, or may extend to a position closer to the electrode assembly 20 than the lid 60.

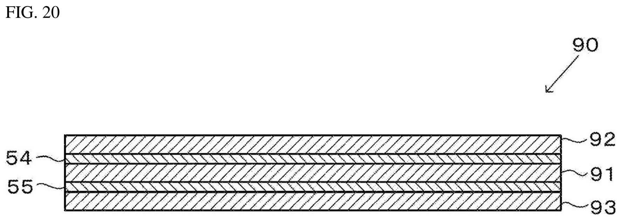

Figs. 19 and 20 are sectional views showing an example of a layer configuration of the barrier film 90.

As shown in Fig. 19, the barrier film 90 may include a barrier layer 91, and a heat-sealable resin layer 92 laminated on a surface of the barrier layer 91 opposite to a surface joined to the lid 60. As specifications about the barrier layer 91, the specifications about the barrier layer 52 can be applied.

The heat-sealable resin layer 92 is heat-sealed with the heat-sealable resin layer 53 of the outer package film 50. As specifications about the heat-sealable resin layer 92, the specifications about the heat-sealable resin layers 60Z, 60BZ, 60CA, 60CC, 160Z, 160BZ, 160CA, 260CA, and 260Z can be applied. The heat-sealable resin layer 92 may be thinner than the heat-sealable resin layer 53. The thickness of the heat-sealable resin layer 92 may be, for example, 5 to 20 $\mu$m.

As shown in Fig. 20, the barrier film 90 may include a heat-sealable resin layer 93 laminated on a surface of the barrier layer 91 joined to the lid 60. Specifications of the heat-sealable resin layer 93 are similar to the specifications of the heat-sealable resin layer 92. The heat-sealable resin layer 93 may be thinner than the heat-sealable resin layer 53. The thickness of the heat-sealable resin layer 93 may be, for example, 5 to 20 $\mu$m. In a case where the barrier film 90 includes the heat-sealable resin layer 93, the barrier film 90 and the lid 60 can be suitably joined by heat fusion. The barrier layer 91 and the heat-sealable resin layer 93 may be joined by the adhesive layer 55.

In the fourteenth modification, the barrier film 90 may be joined to only at least a part of the second surface 62 of the lid 60. In this configuration, as in the seventh modification, the electrode assembly 20 may be sealed by heat-sealing the heat-sealable resin layer 53 of the part of the outer package film 50 protruding further outward than the lid 60 and the heat-sealable resin layer 92 of the barrier film 90.

The fourteenth modification discloses the following technical idea.

(A) A lid used for an outer packaging of an electrical storage device, the lid including:

a lid main body; and
a barrier film joined to the lid main body at a position at which the barrier film is joined to an outer package film forming the outer packaging, wherein
the barrier film includes a heat-sealable resin layer containing an olefin-based copolymer as a main material.

(B) An electrical storage device including:

an electrode assembly; and
an outer packaging sealing the electrode assembly, wherein
the outer packaging includes
an outer package film wrapping the electrode assembly, and
a lid joined to the outer package film,

the lid includes
a lid main body, and
a barrier film joined to the lid main body at a position at which the barrier film is joined to an outer package film forming the outer packaging, and
the barrier film includes a heat-sealable resin layer containing an olefin-based copolymer as a main material.

(C) A barrier film forming a lid used for an outer packaging of an electrical storage device, wherein

the lid includes
a lid main body, and
a barrier film joined to the lid main body at a position at which the barrier film is joined to an outer package film forming the outer packaging, and
the barrier film includes a heat-sealable resin layer containing an olefin-based copolymer as a main material.

(D) A barrier film forming a lid used for an outer packaging of an electrical storage device, wherein

the lid includes
a lid main body, and
the barrier film joined to the lid main body at a position at which the barrier film is joined to an outer package film forming the outer packaging,
the barrier film includes a heat-sealable resin layer, and
in the heat-sealable resin layer, a temperature difference T1 and a temperature difference T2 are measured by the following method, and a value obtained by dividing the temperature difference T2 by the temperature difference T1 is 0.60 or more.

(Measurement of temperature difference T1)

By differential scanning calorimetry, the temperature difference T1 between an extrapolation melting onset temperature and an extrapolation melting termination temperature of a melting peak temperature of the heat-sealable resin layer is measured.

(Measurement of temperature difference T2)

In an environment of a temperature of 85°C, the heat-sealable resin layer is left to stand for 72 hours in an electrolytic solution which is a solution in which a concentration of lithium hexafluorophosphate is 1 mol/l and a volume ratio of ethylene carbonate, diethyl carbonate and dimethyl carbonate is 1 : 1 : 1, and then dried. The temperature difference T2 between an extrapolation melting onset temperature and an extrapolation melting termination temperature of a melting peak temperature of the heat-sealable resin layer after drying is measured by differential scanning calorimetry.
(E) A barrier film forming a lid used for an outer packaging of an electrical storage device, wherein

a lid includes
a lid main body, and
the barrier film joined to the lid main body at a position at which the barrier film is joined to an outer package film forming the outer packaging,
the barrier film includes a heat-sealable resin layer sealed with the outer package film,
a sea-island structure is observed in a sectional image acquired using a field emission scanning electron microscope with respect to a section in a thickness direction of the heat-sealable resin layer, and
in the sectional image, a ratio of an area of a portion of island is 0.1% or more and 50% or less, preferably 5% or more and 50% or less, still more preferably 10% or more and 50% or less, still more preferably 25% or more and 35% or less.

Reference Signs List

10 Electrical storage device
20 Electrode assembly
40 Outer packaging
50 Outer package film

60 Lid
60B Peripheral member (frame body)
60C Peripheral member (adhesive film)
60Z, 60BZ, 60CA, 60CC, 160Z, 160BZ, 160CA, 260CA, 260Z Heat-sealable resin layer
60CB Barrier layer

## Claims

1. A lid used for an outer packaging of an electrical storage device, the lid comprising
a heat-sealable resin layer containing an olefin-based copolymer as a main material.

2. A lid used for an outer packaging of an electrical storage device, the lid comprising:

    a lid main body; and
    a peripheral member joined to at least a part of a peripheral part of the lid main body, wherein
    the peripheral member includes a heat-sealable resin layer containing an olefin-based copolymer as a main material.

3. The lid according to claim 2, wherein
the peripheral member is an adhesive film joined to the lid main body.

4. The lid according to claim 2, wherein
the peripheral member is a frame body joined to the lid main body.

5. The lid according to any one of claims 1 to 3, wherein
the olefin-based copolymer is an olefin-based random copolymer.

6. The lid according to any one of claims 1 to 4, comprising:

    a lid seal portion sealed with an outer package film forming the outer packaging; and
    a protrusion protruding from the lid seal portion.

7. The lid according to any one of claims 1 to 4, wherein
a fatty acid amide-based slipping agent is present in the heat-sealable resin layer.

8. The lid according to claim 7, wherein

    a plurality of kinds of the fatty acid amide-based slipping agents are present, and
    at least one kind of the fatty acid amide-based slipping agents is a saturated fatty acid amide.

9. The lid according to claim 8, wherein
the plurality of kinds of fatty acid amide-based slipping agents further include an unsaturated fatty acid amide.

10. The lid according to claim 8, wherein
the number of carbon atoms of the saturated fatty acid amide is 18 or more.

11. The lid according to claim 8, wherein
the saturated fatty acid amide is behenic acid amide.

12. The lid according to claim 9, wherein
the unsaturated fatty acid amide is erucic acid amide.

13. The lid according to any one of claims 1 to 4, wherein
the heat-sealable resin layer is formed of any of an acid-modified polyolefin-based resin, an unsaturated carboxylic acid-grafted polyolefin-based resin, a polypropylene-based resin, a metal ion-crosslinked polyethylene, a copolymer-based resin of ethylene and acrylic acid derivatives, and a copolymer-based resin of ethylene and methacrylic acid derivatives.

14. The lid according to any one of claims 1 to 4, wherein
the heat-sealable resin layer contains a propylene-based elastomer resin having a melting point higher than 150°C.

15. An electrical storage device comprising:

an electrode assembly; and
an outer packaging sealing the electrode assembly, wherein
the outer packaging includes
an outer package film wrapping the electrode assembly, and
a lid joined to the outer package film, and
the lid includes a heat-sealable resin layer containing an olefin-based copolymer as a main material.

16. An electrical storage device comprising:

an electrode assembly; and
an outer packaging sealing the electrode assembly, wherein
the outer packaging includes
an outer package film wrapping the electrode assembly, and
a lid joined to the outer package film,
the lid includes
a lid main body, and
a peripheral member joined to at least a part of a peripheral part of the lid main body, and
the peripheral member includes a heat-sealable resin layer containing an olefin-based copolymer as a main material.

17. A peripheral member forming a lid used for an outer packaging of an electrical storage device, wherein

the lid includes
a lid main body, and
the peripheral member joined to at least a part of a peripheral part of the lid main body, and
the peripheral member comprises a heat-sealable resin layer containing an olefin-based copolymer as a main material.

18. The peripheral member according to claim 17, which is an adhesive film joined to the lid main body.

19. The peripheral member according to claim 17, which is a frame body joined to the lid main body.

20. A lid used for an outer packaging of an electrical storage device, the lid comprising

a heat-sealable resin layer, wherein
in the heat-sealable resin layer, a temperature difference T1 and a temperature difference T2 are measured by the following method, and a value obtained by dividing the temperature difference T2 by the temperature difference T1 is 0.60 or more,
the temperature difference T1 is measured as follows:

by differential scanning calorimetry, the temperature difference T1 between an extrapolation melting onset temperature and an extrapolation melting termination temperature of a melting peak temperature of the heat-sealable resin layer is measured, and
the temperature difference T2 is measured as follows:
in an environment of a temperature of 85°C, the heat-sealable resin layer is left to stand for 72 hours in an electrolytic solution which is a solution in which a concentration of lithium hexafluorophosphate is 1 mol/l and a volume ratio of ethylene carbonate, diethyl carbonate and dimethyl carbonate is 1 : 1 : 1, and then dried; and
the temperature difference T2 between an extrapolation melting onset temperature and an extrapolation melting termination temperature of a melting peak temperature of the heat-sealable resin layer after drying is measured by differential scanning calorimetry.

21. A lid used for an outer packaging of an electrical storage device, the lid comprising

a heat-sealable resin layer, wherein
the lid comprises a lid seal portion sealed with an outer package film forming the outer packaging, and
a sea-island structure is observed in a sectional image acquired using a field emission scanning electron microscope with respect to a section in a thickness direction of the lid seal portion, and a ratio of an area of a portion of island of the sea-island structure in the sectional image is 0.1% or more and 50% or less.

22. A peripheral member forming a lid used for an outer packaging of an electrical storage device, wherein

the lid includes
a lid main body, and
the peripheral member joined to at least a part of a peripheral part of the lid main body,
the peripheral member comprises a heat-sealable resin layer, and
in the heat-sealable resin layer, a temperature difference T1 and a temperature difference T2 are measured by the following method, and a value obtained by dividing the temperature difference T2 by the temperature difference T1 is 0.60 or more,
the temperature difference T1 is measured as follows:

by differential scanning calorimetry, the temperature difference T1 between an extrapolation melting onset temperature and an extrapolation melting termination temperature of a melting peak temperature of the heat-sealable resin layer is measured, and
the temperature difference T2 is measured as follows:
in an environment of a temperature of 85°C, the heat-sealable resin layer is left to stand for 72 hours in an electrolytic solution which is a solution in which a concentration of lithium hexafluorophosphate is 1 mol/l and a volume ratio of ethylene carbonate, diethyl carbonate and dimethyl carbonate is 1 : 1 : 1, and then dried; and the temperature difference T2 between an extrapolation melting onset temperature and an extrapolation melting termination temperature of a melting peak temperature of the heat-sealable resin layer after drying is measured by differential scanning calorimetry.

23. A peripheral member forming a lid used for an outer packaging of an electrical storage device, wherein

the lid includes
a lid main body, and
the peripheral member joined to at least a part of a peripheral part of the lid main body,
the peripheral member comprises
a peripheral member seal portion sealed with an outer package film forming the outer packaging, and
a sea-island structure is observed in a sectional image acquired using a field emission scanning electron microscope with respect to a section in a thickness direction of the peripheral member seal portion, and a ratio of an area of a portion of island of the sea-island structure in the sectional image is 0.1% or more and 50% or less.

FIG. 1A

FIG. 1B

FIG. 2

FIG. 3

FIG. 4

FIG. 5

FIG. 6

FIG. 7

EP 4 708 485 A1

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

## INTERNATIONAL SEARCH REPORT

| | International application No. |
|---|---|
| | **PCT/JP2024/016607** |

| **A.** | **CLASSIFICATION OF SUBJECT MATTER** |
|---|---|

*H01M 50/16*(2021.01)i; *H01G 2/10*(2006.01)i; *H01G 9/08*(2006.01)i; *H01G 11/80*(2013.01)i; *H01M 50/166*(2021.01)i; *H01M 50/184*(2021.01)i; *H01M 50/186*(2021.01)i; *H01M 50/193*(2021.01)i

FI:   H01M50/16; H01M50/193; H01G9/08 B; H01G2/10 M; H01M50/166; H01M50/184 A; H01M50/186; H01G11/80

According to International Patent Classification (IPC) or to both national classification and IPC

| **B.** | **FIELDS SEARCHED** |
|---|---|

Minimum documentation searched (classification system followed by classification symbols)

H01M50/16; H01G2/10; H01G9/08; H01G11/80; H01M50/166; H01M50/184; H01M50/186; H01M50/193

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | WO 2023/013783 A1 (DAI NIPPON PRINTING CO., LTD.) 09 February 2023 (2023-02-09) paragraphs [0044], [0050]-[0051], [0086]-[0087], [0090], [0134]-[0135], fig. 12, 30-31 | 1-3, 5-18, 20-21, 23 |
| Y | WO 2020/085463 A1 (DAI NIPPON PRINTING CO., LTD.) 30 April 2020 (2020-04-30) paragraphs [0016], [0032], [0080]-[0089], [0105]-[0112] | 1-2, 4-17, 19-20, 22 |
| Y | WO 2021/090951 A1 (DAI NIPPON PRINTING CO., LTD.) 12 August 2021 (2021-08-12) paragraphs [0020]-[0031], [0064]-[0077] | 1-3, 5, 13, 15-18, 21, 23 |
| Y | US 2019/0173073 A1 (HYUNDAI MOTOR COMPANY) 06 June 2019 (2019-06-06) paragraphs [0038], [0050]-[0051], [0058], fig. 1-9 | 2, 4, 16-17, 19, 22 |
| Y | JP 2012-79481 A (DAI NIPPON PRINTING CO., LTD.) 19 April 2012 (2012-04-19) paragraphs [0007]-[0008] | 14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/016607**

| Patent document cited in search report | Publication date (day/month/year) | Patent family member(s) | Publication date (day/month/year) |
|---|---|---|---|
| WO 2023/013783 A1 | 09 February 2023 | CN 117716567 A | |
| WO 2020/085463 A1 | 30 April 2020 | US 2022/0115723 A1 paragraphs [0033], [0049], [0093]-[0102], [0118]-[0125] CN 112913070 A KR 10-2021-0078496 A | |
| WO 2021/090951 A1 | 12 August 2021 | US 2022/0407194 A1 paragraphs [0042]-[0043], [0051]-[0054], [0101]-[0114] CN 114679915 A KR 10-2022-0097874 A | |
| US 2019/0173073 A1 | 06 June 2019 | KR 10-2019-0064724 A CN 109873109 A | |
| JP 2012-79481 A | 19 April 2012 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022123686 A
- WO 2022092231 A